# EUROPÄISCHE PATENTSCHRIFT

(11) **EP 3 440 143 B1**
(45) Veröffentlichungstag und Bekanntmachung des Hinweises auf die Patenterteilung: **04.05.2022**
(21) Anmeldenummer: 17711125.9
(22) Anmeldetag: 14.03.2017
(51) Int. Cl.: C09J 7/00, C08L 63/00, C08L 75/04

(54) **STRAHLENAKTIVIERBARES HAFTKLEBEBAND MIT DUNKELREAKTION UND DESSEN VERWENDUNG**
RADIATION-ACTIVATABLE PRESSURE-SENSITIVE ADHESIVE TAPE HAVING A DARK REACTION AND USE THEREOF
RUBAN AUTOADHÉSIF ACTIVABLE PAR UN RAYONNEMENT PRÉSENTANT UNE RÉACTION INDÉPENDANTE DE LA LUMIÈRE ET SON UTILISATION

(30) Priorität: 04.04.2016 DE 102016205524
(43) Veröffentlichungstag der Anmeldung: 13.02.2019
(73) Patentinhaber: tesa SE, 22848 Norderstedt (DE)
(72) Erfinder: DEMAREZ, Clemence, 13300 Salon-de Provence (FR); SCHUH, Christian, 22767 Hamburg (DE)
(74) Vertreter: tesa SE
(86) Internationale Anmeldenummer: PCT/EP2017/055954
(87) Internationale Veröffentlichungsnummer: WO 2017/174303

(56) Entgegenhaltungen:
- EP-A1- 2 759 514
- WO-A1-92/20754

## Beschreibung

### Strahlenaktivierbares Haftklebeband mit Dunkelreaktion und dessen Verwendung

Die vorliegende Erfindung betrifft ein haftklebriges Klebeband, enthaltend oder bestehend aus einer strahlenaktivierbaren polymerisierbaren Zusammensetzung enthaltend oder bestehend aus:
A 5 bis 60 Gew.-Teile wenigstens einer Filmbildner-Komponente;
B 40 bis 95 Gew.-Teile wenigstens einer Epoxid-Komponente;
C 0,1 bis 10 Gew.-Teile wenigstens eines Photoinitiators, sowie
D optional 0,1 bis 100 Gew.-Teile wenigstens eines Zusatzstoffs,
jeweils bezogen auf die strahlenaktivierbare polymerisierbare Zusammensetzung, wobei sich die Gew.-Teile der Komponente A und B zu 100 ergänzen, dadurch gekennzeichnet, dass die Filmbildner-Komponente A zumindest ein Polyurethan-Polymer umfasst oder daraus besteht. Die Erfindung betrifft ferner ein Verfahren zum Zusammenfügen von zwei Bauteilen mittels eines solchen Klebebandes sowie dessen Verwendung.

### Stand der Technik

Aus dem Stand der Technik sind UV-härtbare Klebebänder, welche unter anderem Epoxide enthalten, bekannt. So offenbart EP 1 026 218 A1 ein UV-härtbares Haftklebeband, auch als PSA ("Pressure Sensitive Adhesive") bezeichnet, beschrieben, das unter anderem Onium-enthaltende Initiatoren einsetzt. Um eine ausreichende Offenzeit zu ermöglichen, werden zusätzlich Polyalkylenoxide als Retardierungsmittel verwendet. Zudem enthält die Zusammensetzung noch Hydroxy-funktionelle Verbindungen in einer Einsatzmenge von 5 bis 50 in Gew.-%.

EP 2 759 514 A1 offenbart UV-härtbare Barriere-Klebstoffe. Diese Klebstoffe können eine Vielzahl unterschiedlicher Initiatoren beinhalten. Die Druckschrift offenbart hingegen nicht, welcher dieser Initiatoren für eine schnelle Härtung und gleichzeitig eine ausreichende Offenzeit einzusetzen wäre.

EP 0 276 716 beschreibt eine härtbare Zusammensetzung aus einem Epoxid-Harz und einem UV-Katalysator. Die Zusammensetzung enthält eine Komponente mit Polyalkylenoxid-Einheiten zur Verhinderung einer unmittelbaren Hautbildung bei beginnender UV-Bestrahlung. Bei den hier beschriebenen Zusammensetzungen kann es als nachteilig empfunden werden, dass Polyalkylenoxid-Verbindungen verwendet werden müssen, um die Offenzeit zu verlängern, wobei diese Verbindungen nicht für alle Anwendungen solcher Klebebänder gewünscht sind. Die Zugabe solcher Verbindungen kann je nach Menge und Art sich direkt auf die Verklebungsfestigkeiten und Alterungsbeständigkeit auswirken. Vor allen Dingen polare Verbindungen wie Polyalkylenoxide können einen negativen Einfluss auf die Feucht-Wäremebständigkeit haben.

Aus EP 1 073 697 B1 ist eine härtbare Zusammensetzung bekannt, die 20 bis 80 Gew.-% eines härtbaren Epoxid-Harzes, 20 bis 80 Gew.-% eines thermoplastischen Ethylenvinylacetat-Copolymer-Harzes sowie eine wirksame Menge eines Photokatalysators aus einem Sulfoniumsalz oder einem Salz mit einem organometallischen Kation enthält. Bei solchen Zusammensetzungen kann es als nachteilig empfunden werden, dass diese entweder keine ausreichende Offenzeit besitzen, innerhalb der eine Verklebung von Bauteilen nach UV-Bestrahlung des Klebebandes stattfinden kann oder aber keine zufriedenstellende Aushärtung nach dem Ende der Bestrahlung (Dunkelreaktion) stattfindet. Konkret kann sich hier das Problem stellen, dass entweder eine ausreichende Offenzeit eingestellt werden kann, die Klebebänder dann aber zu langsam in der Dunkelreaktion aushärten. Oder aber die Reaktionsgeschwindigkeit des Systems ist derart hoch, dass zwar die Dunkelreaktion ausreichend zügig verläuft, jedoch die anfängliche Vernetzungsreaktion derart schnell abläuft, dass keine ausreichende Offenzeit erzielt werden kann.

WO 92/20754 beschreibt ein photopolymerisierbares Epoxid-basiertes Haftklebeband, in welchem Phenoxy-Harze als Filmbildner verwendet werden. Zur Steuerung der Offenzeit sind hierin Polyole wie beispielsweise Polyether-Polyole, Polyester-Polyole oder Polycaprolacton-Polyole beschrieben. Wie die Ausführungsbeispiele dieser Druckschrift zeigen, benötigen diese Klebebänder eine thermische Nachhärtung von etwa 20 Minuten bei 115 °C. Dieser zusätzliche Härtungsschritt erfordert nicht nur einen erhöhten Aufwand bei der Verwendung derartiger Klebebänder sondern beschränkt auch deren Anwendungsbereich, da nicht sämtliche zu verklebende Substrate eine solche Temperaturbeanspruchung verkraften.

In EP 1 518 912 A1 wird ein Klebstoff, ein s-s Klebeband und ein d-s Klebeband beschrieben, welches zur Verkapselung von empfindlicher Elektronik verwendet wird. Um die empfindliche Elektronik nicht der zur Aushärtung nötigen UV-Strahlung auszusetzen oder falls das 2. Substrat nicht transparent ist (z.B. wegen Metall-Leiterbahnen oder anderen UV-Absorbern), werden die Klebstoffe vor dem Fügen des zweiten Substrates mit UV-Licht aktiviert. Damit es noch zu einer ausreichenden Verklebung des 2. Substrates kommt, wird eine gewisse Offenzeit nach Aktivierung benötigt. Dazu muss die Härtungsreaktion inhibiert werden, was über die Zugabe von aliphatischen Kohlenwasserstoffverbindungen mit Hydroxylgruppe oder Polyethern erfolgt. In den Beispielen werden solche "reaction modifier" eingesetzt und Offenzeiten von bis zu 8 Minuten erreicht (table 5, example 15). Werden solche reaction modifier nicht eingesetzt, ist keine Offenzeit zu erreichen (table 5, example 12&13), obwohl als Photoinitiator im Vergleich zum tetrakis pentafluorphenyl borat Anion ein langsamerer Initiator mit Antimonat Anion verwendet wurde (Herstellung example 12). Für Verklebungen mit hohen Festigkeiten sind Klebstoffe mit möglichst wenigen Zusatzstoffen wie "reaction modifier" wünschenswert, da diese zwar die Offenzeit steuern, aber auch die Eigenschaften der finalen Verklebung unvorteilhaft beeinflussen können.

### Aufgabe der Erfindung

Die Aufgabe der Erfindung bestand somit darin, ein haftklebriges strahlenaktivierbares Klebeband zur Verfügung zu stellen, welches zum einen eine ausreichende Offenzeit von insbesondere wenigstens einer Minute, bevorzugt wenigstens 5 Minuten, aufweist und nach einer Strahlenaktivierung eine zufriedenstellende Dunkelreaktion und gute finale Verklebungsfestigkeiten zeigt. Die Dunkelreaktion soll bei Raumtemperatur insbesondere nach spätestens 24 Stunden abgeschlossen sein. Zudem soll das Klebeband zufriedenstellende Verklebungsfestigkeiten von insbesondere mehr als 2 MPa auf Stahl besitzen. Ferner sollte das Klebeband keinen thermischen Nachhärtungsschritt bei Temperaturen deutlich oberhalb der Raumtemperatur benötigen, also beispielsweise bei mehr als 40 °C.

### Lösung der Aufgabe

Diese Aufgabe wird bei einem Klebeband der eingangs genannten Art dadurch gelöst, dass die Filmbildner-Komponente A zumindest ein Polyurethan-Polymer umfasst oder daraus besteht. Die vorliegende Erfindung betrifft somit ein haftklebriges Klebeband, enthaltend oder bestehend aus einer strahlenaktivierbaren polymerisierbaren Zusammensetzung enthaltend oder bestehend aus:
A 5 bis 60 Gew.-Teile wenigstens einer Filmbildner-Komponente;
B 40 bis 95 Gew.-Teile wenigstens einer Epoxid-Komponente;
C 0,1 bis 10 Gew.-Teile wenigstens eines Photoinitiators, sowie
D optional 0,1 bis 200 Gew.-Teile wenigstens eines Zusatzstoffs,
jeweils bezogen auf die strahlenaktivierbare polymerisierbare Zusammensetzung, wobei sich die Gew.-Teile der Komponente A und B zu 100 ergänzen, wobei die strahlenaktivierbare polymerisierbare Zusammensetzung dadurch gekennzeichnet ist, dass die Filmbildner-Komponente A zumindest ein Polyurethan-Polymer umfasst oder daraus besteht.

Der vorliegenden Erfindung liegt die Erkenntnis zugrunde, dass ein Klebeband mit einer Zusammensetzung der vorgenannten Art zum einen eine Offenzeit von typischerweise einer Minute oder mehr aufweist, insbesondere wenigstens 3 Minuten, vorzugsweise von 5 Minuten oder mehr, und gleichzeitig nach abgeschlossener Strahlenaktivierung eine Dunkelreaktion zeigt, die bei Raumtemperatur eine vollständige Durchhärtung des Klebebandes beziehungsweise der polymerisierbaren Zusammensetzung innerhalb von 24 Stunden ermöglicht. Zudem kommen die erfindungsgemäßen Zusammensetzungen ohne den Einsatz der im Stand der Technik beschriebenen "reaction modifier" aus. Auch deshalb zeichnen sich die erfindungsgemäßen Klebebänder durch eine hohe Verklebungsfestigkeit aus, selbst ohne thermische Nachbehandlung.

Als "haftklebrig" beziehungsweise als "Haft"-klebemassen werden Klebemassen bezeichnet, die bereits unter relativ schwachem Andruck eine dauerhafte Verbindung mit dem Haftgrund erlauben und nach Gebrauch im Wesentlichen rückstandsfrei vom Haftgrund wieder abgelöst werden können. Im Sinne der vorliegenden Erfindung besitzt ein haftklebriges Klebeband eine Klebkraft im unausgehärteten Zustand von wenigstens 1 N/cm. Die Klebkraft wird hierbei auf Stahl analog ISO 29862:2007 (Methode 3) bei 23 °C und 50 % relativer Luftfeuchte bei einer Abzugsgeschwindigkeit von 300 mm/min und einem Abzugswinkel von 180° bestimmt. Als Verstärkungsfolie wird eine geätzte PET-Folie mit einer Dicke von 36 µm verwendet, wie sie von der Firma Coveme (Italien) erhältlich ist. Die Verklebung eines 2cm breiten Messstreifens wird dabei mittels einer Anrollmaschine mit 4 kg bei einer Temperatur von 23 °C vorgenommen. Das Klebeband wird sofort nach der Applikation abgezogen. Der Messwert (in N/cm) ergab sich als Mittelwert aus drei Einzelmessungen.

Haftklebemassen wirken bei Raumtemperatur permanent haftklebrig, weisen also eine hinreichend geringe Viskosität und eine hohe Anfass¬klebrigkeit auf, so dass sie die Oberfläche des jeweiligen Klebegrunds bereits bei geringem Andruck be¬netzen. Die Verklebbarkeit der Klebemassen beruht auf ihren adhäsiven Eigenschaften und die Wiederablösbarkeit auf ihren kohäsiven Eigenschaften.

### Allgemeine Beschreibung

Das erfindungsgemäße (Haft-)Klebeband kann trägerlos oder mit wenigstens einem Trägermaterial ausgestaltet sein. Ist ein Trägermaterial vorhanden, kann dieses ein- oder vorzugsweise beidseitig mit einer (Haft)klebemasse versehen sein, die die erfindungsgemäße strahlenaktivierbare polymerisierbare Zusammensetzung enthält oder daraus besteht. Das Trägermaterial umfasst alle flächigen Gebilde, beispielsweise in zwei Dimensionen ausgedehnte Folien oder Folienabschnitte, Bänder mit ausgedehnter Länge und begrenzter Breite, Bandabschnitte, Stanzlinge (beispielsweise in Form von Umrandungen oder Begrenzungen einer (opto-) elektronischen Anordnung), Mehrschichtanordnungen und dergleichen. Dabei sind für verschiedene Anwendungen unterschiedlichste Träger wie zum Beispiel Folien, Gewebe, Vliese und Papiere mit den Klebemassen kombinierbar.

Des Weiteren umfasst der Ausdruck "Klebeband" auch so genannte "Transferklebebänder", das heißt ein Klebeband ohne Träger. Bei einem Transferklebeband ist die Klebemasse, die hier dem Klebeband entspricht, vielmehr vor der Applikation zwischen flexiblen Linern aufgebracht, die mit einer Trennschicht versehen sind und/oder anti-adhäsive Eigenschaften aufweisen. Zur Applikation wird regelmäßig zunächst ein Liner entfernt, die Klebemasse/ das Klebeband appliziert und dann der zweite Liner entfernt. Die Klebemasse kann so direkt zur Verbindung zweier Oberflächen verwendet werden. Derartige trägerlose Transferklebebänder sind erfindungsgemäß besonders bevorzugt. Mit einem solchen erfindungsgemäßen haftklebrigen trägerlosen Transferklebeband wird eine in Positionierung und Dosierung sehr genaue Verklebung ermöglicht.

Es sind auch Klebebänder möglich, bei denen nicht mit zwei Linern sondern mit einem einzigen doppelseitig trennend ausgerüstet Liner gearbeitet wird. Die Klebebandbahn ist dann an ihrer Oberseite mit der einen Seite eines doppelseitig trennend ausgerüsteten Liners abgedeckt, ihre Unterseite mit der Rückseite des doppelseitig trennend ausgerüsteten Liners, insbesondere einer benachbarten Windung auf einem Ballen oder einer Rolle.

Die Dicke der Haftklebemasse, die entweder als Transferklebeband oder auf einem flächigen Gebilde beschichtet vorliegt, beträgt bevorzugt zwischen 1 µm und 2000 µm, weiter bevorzugt zwischen 5 µm und 1000 µm und besonders bevorzugt zwischen etwa 50 µm und 550 µm.

Schichtdicken zwischen 300 µm und 700 µm werden zur Überbrückung von Toleranzen zum Beispiel in der Automobilindustrie benötigt.

Schichtdicken zwischen 1 µm und 50 µm reduzieren den Materialeinsatz. Jedoch kommt es zu einer Verringerung der Haftung aus dem Substrat.

### Filmbildner-Komponente A

Als Polyurethan-Polymer der Filmbildner-Komponente A kann im Prinzip jedes an sich bekannte Polyurethan-Polymer eingesetzt werden. Unter Polyurethan-Polymeren werden im Rahmen der vorliegenden Erfindung Reaktionsprodukte verstanden, die durch Umsetzung von (A1) Polyisocyanaten und (A2) Polyolen erhältlich sind.

Geeignete Polyisocyanate (A1) sind aromatische, araliphatische, aliphatische oder cycloaliphatische Polyisocyanate. Es können auch Mischungen solcher Polyisocyanate eingesetzt werden. Beispiele geeigneter Polyisocyanate sind Butylendiisocyanat, Hexamethylendiisocyanat (HDI), Isophorondiisocyanat (IPDI), 2,2,4 und/oder 2,4,4-Trimethylhexamethylendiisocyanat, die isomeren Bis(4,4'-isocyanatocyclohexyl)methane oder deren Mischungen beliebigen Isomerengehalts, Isocyanatomethyl-1,8-octandiisocyanat, 1,4-Cyclohexylendiisocyanat, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, Triphenylmethan-4,4',4"-triisocyanat oder deren Derivate mit Urethan-, Isocyanurat-, Allophanat-, Biuret-, Uretdion-, Iminooxadiazindionstruktur und Mischungen derselben. Bevorzugt sind Hexamethylendiisocyanat, Isophorondiisocyanat und die isomeren Bis(4,4'-isocyanatocyclohexyl)methane sowie deren Mischungen.

Bevorzugt handelt es sich um Polyisocyanate oder Polyisocyanatgemische der genannten Art mit ausschließlich aliphatisch und/oder cycloaliphatisch gebundenen Isocyanatgruppen. Weiterhin bevorzugt sind 2,4- und/oder 2,6-Toluylendiisocyanat. Ganz besonders bevorzugte Ausgangskomponenten (A1) sind Polyisocyanate beziehungsweise Polyisocyanatgemische auf Basis von HDI, IPDI und/oder 4,4'-Diisocyanatodicyclohexylmethan.

Weiterhin geeignet als Polyisocyanate (A1) sind beliebige, durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Urethan-, Allophanat-, Biuret-, Iminooxadiazindion- und/oder Oxadiazintrionstruktur, wie sie beispielsweise in J. Prakt. Chem. 336 (1994) S. 185-200 beschrieben sind.

Geeignete Polyole (A2) verfügen über eine OH-Funktionalität von ≥ 1,5 bis ≤ 4. Die Polyole (A2) sind bevorzugt polymere Polyole, wie zum Beispiel Polyacrylatpolyole, Polyesterpolyole, Polylactonpolyole, Polyetherpolyole, Polycarbonatpolyole, Polyestercarbonatpolyole, Polyetherestercarbonatpolyole, Polyacetalpolyole, Polyolefinpolyole und Polysiloxanpolyole. Bevorzugt sind Polyole in einem Molgewichtsbereich von ≥ 400 g/mol bis ≤ 2500 g/mol mit einer OH-Funktionalität von ≥ 1,9 bis ≤ 3.

Die in Frage kommenden Hydroxylgruppen aufweisenden Polycarbonate sind durch Reaktion von Kohlensäurederivaten, zum Beispiel Diphenylcarbonat, Dimethylcarbonat oder Phosgen mit Diolen erhältlich. Als derartige Diole kommen zum Beispiel Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A aber auch Lacton-modifizierte Diole in Frage. Bevorzugt enthält die Diolkomponente ≥ 40 Gewichts-% bis ≤ 100 Gewichts-% Hexandiol, bevorzugt 1,6-Hexandiol und/oder Hexandiol-Derivate, bevorzugt solche, die neben endständigen OH-Gruppen Ether- oder Estergruppen aufweisen, zum Beispiel Produkte, die durch Umsetzung von 1 Mol Hexandiol mit mindestens 1 Mol, bevorzugt 1 bis 2 Mol Caprolacton gemäß DE-A 1 770 245 oder durch Veretherung von Hexandiol mit sich selbst zum Di- oder Trihexylenglykol erhalten wurden. Die Herstellung solcher Derivate ist zum Beispiel aus DE-A 1 570 540 bekannt. Auch die in DE-A 3 717 060 beschriebenen Polyether-Polycarbonatdiole können eingesetzt werden.

Die Hydroxylpolycarbonate sollten bevorzugt linear sein. Sie können jedoch gegebenenfalls durch den Einbau polyfunktioneller Komponenten, insbesondere niedermolekularer Polyole, leicht verzweigt werden. Hierzu eignen sich beispielsweise Glycerin, Trimethylolpropan, Hexantriol-1,2,6, Butantriol-1,2,4, Trimethylolpropan, Pentaerythrit, Chinit, Mannit, und Sorbit, Methylglykosid, 1,3,4,6-Dianhydrohexite.

Als Polyetherpolyole geeignet sind die in der Polyurethanchemie an sich bekannten Polytetramethylenglykolpolyether, die zum Beispiel über Polymerisation von Tetrahydrofuran durch kationische Ringöffnung hergestellt werden können.

Darüber hinaus geeignete Polyetherpolyole (A2) sind die unter Verwendung von Startermolekülen hergestellten Polyadditionsprodukte des Ethylenoxids, Propylenoxids, Butylenoxids, Styroloxids oder Epichlorhydrins, sowie deren Misch- und Pfropfpolyadditionsprodukte sowie die durch Kondensation von mehrwertigen Alkoholen oder deren Mischungen und die durch Alkoxylierung von Wasser, mehrwertigen Alkoholen, Aminen oder Aminoalkoholen gewonnenen Polyether. Bevorzugt sind Homo- und/oder Mischpolyadditionsverbindungen von Ethylenoxid und/oder Propylenoxid mit einem zahlenmittleren Molekulargewicht von 400 bis 4000 Da, besonders bevorzugt von 400 bis 2500 Da, ganz besonders bevorzugt von 800 bis 2000 Da. Die mittlere Funktionalität der Polyetherpolyole ist größer 1,85, bevorzugt von 1,88 bis 3. Besonders bevorzugt sind difunktionelle Polyether mit einer Funktionalität von 1,92 bis 2,05.

Der Anteil an Ethylenoxid in den Homo- und/oder Mischpolyadditionsverbindungen von Ethylenoxid und/oder Propylenoxid beträgt 0 bis 100%, bevorzugt 0 bis 30 %, besonders bevorzugt 0 bis 10%.

In einer besonders bevorzugten Ausführungsform der vorliegenden Erfindung ist das Polyetherpolyol (A2) ein Homopolyadditionsprodukt des Propylenoxids mit einem Molekulargewicht von 800 bis 2000 Da und einer Funktionalität von 1,92 bis 2,05.

Als Polyesterpolyole geeignet sind zum Beispiel Umsetzungsprodukte von mehrwertigen, bevorzugt zweiwertigen und gegebenenfalls zusätzlich dreiwertigen Alkoholen mit mehrwertigen, bevorzugt zweiwertigen Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, zum Beispiel durch Halogenatome substituiert und/oder ungesättigt sein.

Besonders bevorzugte polymere Polyole (A2) sind Polycarbonate und Polyether, ganz besonders bevorzugt Polyether.

Mögliche kurzkettige Polyole, insbesondere zur Kettenverlängerung und/oder Terminierung des Polyurethan-Prepolymers können monofunktionelle Alkohole und Monoamine sein. Bevorzugte Monoalkohole sind aliphatische Monoalkohole mit 1 bis 18 C-Atomen, wie zum Beispiel Ethanol, n-Butanol, Ethylenglykol-monobutylether, 2-Ethylhexanol, 1-Octanol, 1-Dodecanol oder 1-Hexadecanol. Bevorzugte Monoamine sind aliphatische Monoamine, wie zum Beispiel Diethylamin, Dibutylamin, Ethanolamin, N-Methylethanolamin oder N,N-Diethanolamin und Amine der Jeffamin^{®} M-Reihe (Huntsman Corp. Europe, Belgien) oder aminofunktionelle Polyethylenoxide und Polypropylenoxide.

Ebenfalls geeignete kurzkettige Polyole sind Aminopolyole oder Polyamine mit einem Molgewicht unter 400 g/mol, die in der entsprechenden Literatur in großer Zahl beschrieben sind. Dies sind beispielsweise:
a) Alkandiole beziehungsweise -triole, wie Ethandiol, 1,2- und 1,3-Propandiol, 1,4- und 2,3-Butandiol, 1,5-Pentandiol, 1,3-Dimethylpropandiol, 1,6-Hexandiol, Neopentylglykol, 1,4-Cyclohexandimethanol, 2-Methyl-1,3-propandiol, 2-Ethyl-2-butylpropandiol, Trimethylpentandiol, stellungsisomere Diethyloctandiole, 1,2- und 1,4-Cyclohexandiol, hydriertes Bisphenol A [2,2-Bis(4-hydroxycyclohexyl)-propan], 2,2-Dimethyl-3-hydroxypropionsäure-(2,2-dimethyl-3-hydroxypropylester), Trimethylolethan, Trimethylolpropan oder Glycerin,
b) Etherdiole, wie Diethylendiglykol, Triethylenglykol, Tetraethylenglykol, Dipropylenglykol, Tripropylenglykol, 1,3-Butylenglykol oder Hydrochinondihydroxyethylether,
c) Esterdiole der allgemeinen Formeln (I) und (II),

   HO-(CH2)x-CO-O-(CH2)y-OH (I)

   HO-(CH2)x-O-CO-R-CO-O(CH2)x OH (II)

   in welchen
   R ein Alkylen- oder Arylenrest mit 1 bis 10 C-Atomen, bevorzugt 2 bis 6 C-Atomen,
   x 2 bis 6 und
   y 3 bis 5 ist,
   wie zum Beispiel δ-Hydroxybutyl-ε-hydroxy-capronsäureester, ω-Hydroxyhexyl-γ-hydroxybuttersäureester, Adipinsäure-(β-hydroxyethyl)ester und Terephthalsäurebis(β-hydroxy-ethyl)ester und
d) Di- und Polyamine wie zum Beispiel 1,2-Diaminoethan, 1,3 Diaminopropan, 1,6-Diaminohexan, 1,3- und 1,4-Phenylendiamin, 4,4'-Diphenylmethandiamin, Isophorondiamin, Isomerengemisch von 2,2,4- und 2,4,4-Trimethylhexa-methylendiamin, 2-Methyl-pentamethylendiamin, Diethylentriamin, 1,3- und 1,4-Xylylendiamin, α,α,α,α'-Tetramethyl-1,3- und -1,4-xylylendiamin, 4,4-Diaminodicyclohexylmethan, aminofunktionelle Polyethylenoxide oder Polypropylenoxide, die unter dem Namen Jeffamin^{®}, D-Reihe (Fa. Huntsman Corp. Europe, Belgien) erhältlich sind, Diethylentriamin und Triethylentetramin. Als Diamine im Sinne der Erfindung sind auch Hydrazin, Hydrazinhydrat und substituierte Hydrazine geeignet, wie zum Beispiel N-Methylhydrazin, N,N'-Dimethylhydrazin und deren Homologe sowie Säuredihydrazide, Adipinsäure, β-Methyladipinsäure, Sebacinsäure, Hydracrylsäure und Terephthalsäure, Semicarbazidoalkylenhydrazide, wie zum Beispiel β-Semicarbazidopropionsäurehydrazid (zum Beispiel beschrieben in DE-A 1 770 591), Semicarbazidoalkylen-carbazinester, wie zum Beispiel 2-Semicarbazidoethylcarbazinester (zum Beispiel beschrieben in DE-A 1 918 504) oder auch Aminosemicarbazid-Verbindungen, wie zum Beispiel β-Aminoethylsemicarbazidocarbonat (zum Beispiel beschrieben in DE-A 1 902 931).

Zur Herstellung des Polyurethan-Polymers der Filmbildner-Komponente A können sämtliche, aus dem Stand der Technik bekannte Verfahren verwendet werden. Üblicherweise werden die Bestandteile in stöchimetrisch geeigneten Verhältnissen miteinander zur Reaktion gebracht und bevorzugt auf höhere Temperaturen, insbesondere im Bereich von 50 bis 120 °C, aufgeheizt.

Die Reaktion kann in Substanz oder in Lösung erfolgen. Geeignete Lösungsmittel sind zum Beispiel Aceton, Butanon, Tetrahydrofuran, Dioxan, Acetonitril, Dipropylenglykoldimethylether und 1-Methyl-2-pyrrolidon, die nicht nur zu Beginn der Herstellung, sondern gegebenenfalls in Teilen auch später zugegeben werden können. Bevorzugt sind Aceton und Butanon. Es ist möglich, die Reaktion unter Normaldruck oder erhöhtem Druck, zum Beispiel oberhalb der Normaldruck-Siedetemperatur eines Lösungsmittels wie zum Beispiel Aceton durchzuführen.

Weiterhin können die zur Beschleunigung der Isocyanatadditionsreaktion bekannten Katalysatoren, wie zum Beispiel Triethylamin, 1,4-Diazabicyclo-[2,2,2]-octan, Dibutylzinnoxid, Zinndioktoat, Dibutylzinndilaurat, Zinn-bis-(2-ethylhexanoat), Zinkdioktoat, Zink-bis-(2-ethylhexanoat) oder andere metallorganischen Verbindungen mit vorgelegt oder später zudosiert werden. Bevorzugt sind Dibutylzinndilaurat, Zinkdioktoat und Zink-bis-(2-ethylhexanoat), besonders bevorzugt ist Zink-bis-(2-ethylhexanoat).

Bei der Herstellung des Polyurethan-Polymers beträgt das Stoffmengenverhältnis von Isocyanatgruppen zu mit Isocyanat reaktiven Gruppen beispielsweise ≥ 0,90 bis ≤ 3. Im Rahmen der vorliegenden Erfindung können sowohl OH-funktionelle als auch Isocyanatfunktionelle Polyurethan-Polymere verwendet werden. Die Funktionalität kann durch die Einstellung des Stoffmengenverhältnisses von Isocyanatgruppen zu mit Isocyanat reaktiven Gruppen gesteuert werden.

Der Umsetzungsgrad wird üblicherweise durch Verfolgung des NCO-Gehalts der Reaktionsmischung überwacht. Dazu können sowohl spektroskopische Messungen, zum Beispiel Infrarot- oder Nahinfrarot-Spektren, Bestimmungen des Brechungsindex als auch chemische Analysen, wie Titrationen, von entnommenen Proben vorgenommen werden. Es werden Polyurethan-Polymere, die freie Isocyanatgruppen enthalten, in Substanz oder in Lösung erhalten.

Nach einer vorteilhaften Weiterbildung des erfindungsgemäßen Klebebandes besitzt das Polyurethan-Polymer der Filmbilder-Komponente A ein gewichtsmittleres Molekulargewicht M_{w} von wenigstens 40.000 g/mol, bestimmt über Gelpermeationschromatographie (GPC). Weiter bevorzugt liegt das gewichtsmittlere Molekulargewicht M_{w} bei wenigstens 50.000 g/mol, insbesondere bei 50.000 bis 1.000.000 g/mol. Der Einsatz derartiger Polyurethan-Polymere in der Filmbildner-Komponente A ist besonders vorteilhaft, da hierdurch die Offenzeit nach Strahlenexposition der polymerisierbaren Zusammensetzung verlängert werden kann. Hierfür besonders geeignet sind OH-funktionelle Polyurethan-Polymere. Bei der Gelpermeationschromatographie (GPC) wird THF (Tetrahydrofuran) als Eluent verwendet und mit 0,1 Vol.-% Trifluoressigsäure eingesetzt. Die Messung erfolgt bei 25 °C. Als Vorsäule wird PSS-SDV, 5 µ, 10³ Å, ID 8,0 mm x 50 mm verwendet. Zur Auftrennung werden die Säulen PSS-SDV, 5 µ, 10³ sowie 10⁵ und 10⁶ mit jeweils ID 8,0 mm x 300 mm eingesetzt. Die Probenkonzentration beträgt 4 g/l, die Durchflussmenge liegt bei 1,0 ml pro Minute. Es wird gegen Polystyrol-Standards gemessen.

Zudem tragen die vorgenannten Polyurethan-Polymere in vorteilhafter Weise zur anfänglichen Haftklebrigkeit des Klebebandes bei. Dadurch wird im Zeitfenster der Offenzeit eine vorläufige Fixierung der miteinander zu verklebenden Bauteile ermöglicht. Damit wird verhindert, dass sich die Bauteile ohne Weiteres selbst aus der gewünschten Verklebungsposition bewegen können. Die vorgenannten positiven Eigenschaften des Polyurethan-Polymers in der Filmbildner-Komponente A sind insbesondere bei der Verwendung linearer Polyurethan-Polymere ausgeprägt, insbesondere linearer OHfunktioneller Polyurethan-Polymere.

Die strahlenaktivierbare polymerisierbare Zusammensetzung enthält erfindungsgemäß 5 bis 60 Gew.-Teile an wenigstens einer Filmbildner-Komponente A, insbesondere 10 bis 50 Gew.-Teile, bevorzugt 15 bis 40 Gew.-Teile, wobei sich die Gew.-Teile der Komponente A und B zu 100 ergänzen.

### Epoxid-Komponente B

Als Epoxid-Komponente B können epoxidhaltige Materialien bzw. Epoxidharze verwendet werden, wobei es sich um beliebige organische Verbindungen mit wenigstens einem Oxiranring handelt, die durch eine Ringöffnungsreaktion polymerisierbar sind. Solche Materialien, die allgemein als Epoxide bezeichnet werden, umfassen sowohl monomere als auch polymere Epoxide und können aliphatisch, cycloaliphatisch oder aromatisch sein. Diese Materialien weisen im Allgemeinen im Durchschnitt wenigstens zwei Epoxidgruppen pro Molekül, vorzugsweise mehr als zwei Epoxidgruppen pro Molekül, auf. Die "durchschnittliche" Anzahl an Epoxidgruppen pro Molekül wird als die Anzahl an Epoxidgruppen in dem epoxidhaltigen Material dividiert durch die Gesamtanzahl an vorliegenden Epoxidmolekülen definiert.

Die polymeren Epoxide umfassen lineare Polymere mit endständigen Epoxidgruppen (z. B. ein Diglycidylether eines Polyoxyalkylenglycols), Polymere mit Gerüstoxiraneinheiten (z. B. Polybutadien-Polyepoxid) und Polymere mit Epoxidseitengruppen (z. B. ein Glycidylmethacrylatpolymer oder -copolymer). Das Molekulargewicht des epoxidhaltigen Materials kann von 58 bis etwa 100.000 g/mol oder mehr variieren. Mischungen aus verschiedenen epoxidhaltigen Materialien können auch in den Hotmelt-Zusammensetzungen der Erfindung verwendet werden. Nützliche epoxidhaltige Materialien umfassen jene, die Cyclohexenoxidgruppen, wie die Epoxycyclohexancarboxylate, die durch 3,4-Epoxycyclohexylmethyl-3,4-epoxycyclohexancarboxylat, 3,4-Epoxy-2-methylcyclohexylmethyl-3,4-epoxy-2-methylcyclohexancarboxylat und Bis(3,4-epoxy-6-methylcyclohexylme-thyl)adipat exemplifiziert sind, enthalten. Für eine detailliertere Liste von nützlichen Epoxiden dieser Art kann auf U.S. Patent Nr. 3,117,099 verwiesen werden.

Weitere epoxidhaltige Materialien, die bei der Anwendung dieser Erfindung besonders nützlich sind, umfassen Glycidylethermonomere. Beispiele sind die Glycidylether von mehrwertigen Phenolen, die durch Reaktion eines mehrwertigen Phenols mit einem Überschuss an Chlorhydrin, wie Epichlorhydrin (z. B. der Diglycidylether von 2,2-Bis-(2,3-epoxypropoxyphenol)propan), erhalten werden. Weitere Beispiele von Epoxiden dieses Typs, die bei der Anwendung dieser Erfindung verwendet werden können, sind in U.S. Patent Nr. 3,018,262 beschrieben.

Es gibt eine Vielzahl an im Handel erhältlichen epoxidhaltigen Materialien, die in dieser Erfindung verwendet werden können. Insbesondere geeignet sind Epoxide, die leicht erhältlich sind, wie Octadecylenoxid, Epichlorhydrin, Styroloxid, Vinylcyclohexenoxid, Glycidol, Glycidylmethacrylat, Diglycidylether von Bisphenol A (z. B. jene, die unter den Handelsbezeichnungen EPON 828, EPON 1004 und EPON 1001F von Shell Chemical Co. und DER-332 und DER-334 von Dow Chemical Co. erhältlich sind), Diglycidylether von Bisphenol F (z. B. ARALDITE GY281 von Ciba-Geigy), Vinylcyclohexendioxid (z. B. ERL 4206 von Union Carbide Corp.), 3,4-Ep-oxycyclohexylmethyl-3,4-epoxycyclohexen-carboxylat (z. B. ERL-4221 von Union Carbide Corp.), 2-(3,4-Epo-xycyclohexyl-5,5-spiro-3,4-epoxy)cyclohexan-metadioxan (z. B. ERL-4234 von Union Carbide Corp.), Bis(3,4-epoxycyclohexyl)adipat (z. B. ERL-4299 von Union Carbide Corp.), Dipentendioxid (z. B. ERL-4269 von Union Carbide Corp.), epoxidiertes Polybutadien (z. B. OXIRON 2001 von FMC Corp.), silikon-harzhaltige Epoxidfunktionalität, Epoxysilane (z. B. beta-(3,4-Epoxycyclohexyl)ethyltrimethoxysilan und gamma-Glycido-xypropyltrimethoxysilan, im Handel erhältlich von Union Carbide), feuerhemmende Epoxidharze (z. B. DER-542, ein bromiertes bisphenolartiges Epoxidharz, erhältlich von Dow Chemical Co.), 1,4-Butandioldiglycidylether (z. B. ARALDITE RD-2 von Ciba-Geigy), hydrierte, auf Bisphenol A-Epichlorhydrin basierende Epoxidharze (z. B. EPONEX 1510 von Shell Chemical Co.) und Polyglycidylether von Phenolformaldehyd-Novolak (z. B. DEN-431 und DEN-438 von Dow Chemical Co.).

In weiterer Ausgestaltung des erfindungsgemäßen Klebebandes enthält die Epoxid-Komponente B mindestens 10 Gew.-% an bei 25 °C flüssigen Epoxid-Harzen, bezogen auf die Epoxid-Komponente B. Der Anteil solcher flüssiger Epoxid-Harze an der Epoxid-Komponente B liegt insbesondere bei 10 bis 90 Gew.-%, weiter bevorzugt bei 20 bis 75 Gew.-%. Klebebänder mit solchen Verhältnissen aus flüssigen und festen EpoxidKomponenten zeigen im unausgehärteten Zustand besonders ausgewogene Klebeigenschaften. Wird ein Klebeband mit besonders guten Auffließeigenschaften gewünscht, so ist der Anteil an flüssigen Epoxidkomponenten bevorzugt 50 bis 80 Gew.-%. Für Anwendungen, bei denen die Klebebänder bereits im unausgehärteten Zustand eine höhere Last tragen müssen, ist ein Anteil von 15 bis 45% besonders bevorzugt. Es kann ein solches Harz oder auch eine Mischung verschiedener Harze eingesetzt werden.

Ein Maß für die Fließfähigkeit ist die dynamische Viskosität. Die dynamische Viskosität wird vorliegend in einem Zylinderrotationsviskosimeter mit einer Standardgeometrie nach DIN 53019-1 (2008-09) bestimmt. Die Viskosität wird bei einer Messtemperatur von 25 °C und einer Schergeschwindigkeit 1 x s⁻¹ gemessen. Als Fluid wird eine Substanz mit einer Viskosität von weniger als 500 Pa·s bezeichnet.

Weiterhin ist im Rahmen der vorliegenden Erfindung vorgesehen, dass die Epoxid-Komponente B maximal 60 Gew.-% Epoxidcyclohexyl-basierte Epoxid-Harze enthält, insbesondere von 5 bis 80 Gew.-%, weiter bevorzugt von 15 bis 60 Gew.-%, jeweils bezogen auf die Epoxid-Komponente B. Der Einsatz flüssiger Epoxycyclohexyl-basierter Harze wirkt sich vorteilhaft auf die klebtechnischen Eigenschaften der Klebemassen im unausgehärteten Zustand insbesondere dann aus, wenn hiervon 10 bis 40 Gew.-% verwendet werden. Werden Anteile von 50 bis 80 Gew.-% verwendet, so lassen sich über die hohe Reaktivität der Epoxycyclohexyl-Derivate in Kombination mit der erfindungsgemäßen Komponente A schnell härtende Haftklebstoffe mit kurzen Offenzeiten (> 1Minute) realisieren.

Das Epoxidcyclohexyl-basierte Epoxid-Harz kann beispielsweise ausgewählt sein aus der Gruppe umfassend oder bestehend aus 3,4-Epoxycyclohexylmethyl-3,4-epoxycyclohexancarboxylat, 3,4-Epoxy-2-methylcyclohexylmethyl-3,4-epoxy-2-methylcyclohexancarboxylat und Bis(3,4-epoxy-6-methylcyclohexylme-thyl)adipat, Bis ((3,4-Epoxycyclohexyl)methyl)adipat Dicyclopentadien Dioxid, sowie Kombinationen hiervon. Diese Verbindungen sind wegen ihrer hohen Reaktivität vorteilhaft. Häufig sind diese Verbindungen flüssig, was für hohe Anteile an Komponente B zu sehr weichen Klebebändern führt. Werden festere Klebebänder gewünscht, kann dies durch die Verwendung von Polymeren mit Epoxycyclohexylgruppen erreicht werden, die beispielsweise über eine radikalische Polymerisation von 3,4-Epoxycyclohexylmethyl Methacrylat gegebenenfalls mit Comonomeren erhältlich sind.

Die Epoxid-Komponente B kann eine mittlere Funktionalität bezogen auf die Alkylenoxid-Gruppen von wenigstens 1,0 bis 6,0 aufweisen, insbesondere von 1,75 bis 3,2, um eine hohe Verklebungsfestigkeit zu erreichen. Die Netzwerkdichte kann über reaktive Verdünner reduziert werden, was zu weniger brüchigen Klebmassen, insbesondere bei hohen Anteilen an Komponente B, führt. Solche reaktiven Verdünner haben typischerweise eine Funktionalität von 1,0.

Die strahlenaktivierbare polymerisierbare Zusammensetzung enthält erfindungsgemäß 40 bis 95 Gew.-Teile an wenigstens einer Epoxid-Komponente B, insbesondere 50 bis 90 Gew.-Teile, bevorzugt 60 bis 85 Gew.-Teile, wobei sich die Gew.-Teile der Komponente A und B zu 100 ergänzen.

Nach einer bevorzugten Ausführungsform des erfindungsgemäßen Klebebandes enthält die Epoxid-Komponente B wenigstens zwei unterschiedliche Epoxid-Harze B1 und B2, von denen
a. das erste Epoxidharz B1 bei 25 °C eine dynamische Viskosität von weniger als 500 Pa*s aufweist, gemessen nach DIN 53019-1 bei einer Messtemperatur von 25 °C und einer Schergeschwindigkeit 1 x s⁻¹, und
b. von denen das zweite Epoxidharz B2 eine Erweichungstemperatur von wenigstens 45 °C oder bei 25 °C eine dynamische Viskosität von wenigstens 1000 Pa*s aufweist, gemessen nach DIN 53019-1 bei einer Messtemperatur von 25 °C und einer Schergeschwindigkeit 1 x s⁻¹,
wobei insbesondere der Anteil des ersten Epoxidharzes B1 10 bis 90 Gew.-%, bevorzugt 20 bis 75 Gew.-%und der Anteil des zweiten Epoxidharzes B2 10 bis 90 Gew.-%, bevorzugt 25 bis 80 Gew.-% beträgt, bezogen auf die Epoxidkomponente B.

### Photoinitiatoren C

Unter den Photoinitiatoren C für eine kationische UV induzierte Härtung sind insbesondere Sulfonium, lodonium und Metallocen basierende Systeme einsetzbar. Als Beispiele für Sulfonium basierende Kationen sei auf die Ausführungen in US 6,908,722 B1 (insbesondere Spalten 10 bis 21) verwiesen.

Als Beispiele für Anionen, die als Gegenionen für die oben genannten Kationen dienen, seien Tetrafluoroborat, Tetraphenylborat, Hexafluorophosphat, Perchlorat, Tetrachloroferrat, Hexafluoroarsenat, Hexafluoroantimonat, Pentafluorohydroxyantimonat, Hexachloroantimonat, Tetrakispentafluorophenylborat, Tetrakis-(pentafluoromethylphenyl)-borat, Bi-(trifluoromethylsulfonyl)-amide und Tris-(trifluoromethylsulfonyl)-methide genannt. Ferner sind insbesondere für lodonium-basierende Initiatoren auch Chlorid, Bromid oder lodid als Anionen denkbar, wobei aber Initiatoren, die im Wesentlichen frei von Chlor und Brom sind, bevorzugt sind.

Konkreter zählen zu den einsetzbaren Systemen
- Sulfonium-Salze (siehe zum Beispiel US 4,231,951 A, US 4,256,828 A, US 4,058,401 A, US 4,138,255 A und US 2010/063221 A1) wie Triphenylsulfoniumhexafluoroarsenat, Triphenylsulfoniumhexafluoroborat, Triphenylsulfoniumtetrafluoroborat, Triphenylsulfoniumtetrakis-(pentafluorobenzyl)-borat, Methyldiphenylsulfoniumtetrafluoroborat, Methyldiphenylsulfoniumtetrakis-(pentafluorobenzyl)-borat, Dimethylphenylsulfoniumhexafluorophosphat, Triphenylsulfoniumhexafluorophosphat, Triphenylsulfoniumhexafluoroantimonat, Diphenylnaphthylsulfoniumhexafluoroarsenat, Tritolylsulfoniumhexafluorophosphat, Anisyldiphenylsulfoniumhexafluoroantimonat, 4-Butoxyphenyldiphenylsulfoniumtetrafluoroborat, 4-Chlorophenyldiphenylsulfoniumhexafluoroantimonat, Tris-(4-phenoxyphenyl)-sulfoniumhexafluorophosphat, Di-(4-ethoxyphenyl)-methylsulfoniumhexafluoroarsenat, 4-Acetylphenyldiphenylsulfoniumtetrafluoroborat, 4-Acetylphenyldiphenylsulfoniumtetrakis-(pentafluorobenzyl)-borat, Tris-(4-thiomethoxyphenyl)-sulfoniumhexafluorophosphat, Di-(methoxysulfonylphenyl)-methylsulfoniumhexafluoroantimonat, Di-(methoxynaphthyl)-methylsulfoniumtetrafluoroborat, Di-(methoxynaphthyl)-methylsulfoniumetrakis-(penta-fluorobenzyl)-borat, Di-(carbomethoxyphenyl)-methylsulfoniumhexafluorophosphat, (4-Octyloxyphenyl)-diphenylsulfoniumtetrakis-(3,5-bis-trifluoromethylphenyl)-borat, Tris-[4-(4-acetylphenyl)-thiophenyl]-sulfoniumtetrakis-(pentafluorophenyl)-borat, Tris-(dodecylphenyl)-sulfoniumtetrakis-(3,5-bis-trifluoromethylphenyl)-borat, 4-Acetamidphenyldiphenylsulfoniumtetrafluoroborat, 4-Acetamidphenyldiphenylsulfoniumtetrakis-(pentafluoro-benzyl)-borat, Dimethylnaphthylsulfoniumhexafluorophosphat, Trifluoromethyldiphenylsulfoniumtetrafluoroborat, Trifluoromethyldiphenylsulfoniumtetrakis-(pentafluorobenzyl)-borat, Phenylmethylbenzylsulfoniumhexafluorophosphat, 5-Methylthianthreniumhexafluorophosphat, 10-Phenyl-9,9-dimethylthioxantheniumhexafluorophosphat, 10-Phenyl-9-oxothioxantheniumtetrafluoroborat, 10-Phenyl-9-oxothioxantheniumtetrakis-(pentafluoro-benzyl)-borat, 5-Methyl-10-oxothianthreniumtetrafluoroborat, 5-Methyl-10-oxothianthreni-umtetrakis-(pentafluorobenzyl)-borat und 5-Methyl-10,10-dioxothianthreniumhexafluoro-phosphat,
- Iodonium-Salze (siehe zum Beispiel US 3,729,313 A, US 3,741,769 A, US 4,250,053 A, US 4,394,403 A und US 2010/063221 A1) wie Diphenyliodoniumtetrafluoroborat, Di-(4-methylphenyl)-iodoniumtetrafluoroborat, Phenyl-4-methylphenyliodoniumtetrafluoroborat, Di-(4-chlorphenyl)-iodoniumhexafluorophosphat, Dinaphthyliodoniumtetrafluoroborat, Di-(4-trifluormethylphenyl)-iodoniumtetrafluoroborat, Diphenyliodoniumhexafluorophosphat, Di-(4-methylphenyl)-iodoniumhexafluorophosphat, Diphenyliodoniumhexafluoroarsenat, Di-(4-phenoxyphenyl)-iodoniumtetrafluoroborat, Phenyl-2-thienyliodoniumhexafluorophosphat, 3,5-Dimethylpyrazolyl-4-phenyliodoniumhexafluorophosphat, Diphenyliodoniumhexafluoroantimonat, 2,2'-Diphenyliodoniumtetrafluoroborat, Di-(2,4-dichlorphenyl)-iodoniumhexafluorophosphat, Di-(4-bromphenyl)-iodoniumhexafluorophosphat, Di-(4-methoxyphenyl)-iodoniumhexafluorophosphat, Di-(3-carboxyphenyl)-iodoniumhexafluorophosphat, Di-(3-methoxycarbonylphenyl)-iodoniumhexafluorophosphat, Di-(3-methoxysulfonylphenyl)-iodoniumhexafluorophosphat, Di-(4-acetamidophenyl)-iodoniumhexafluorophosphat, Di-(2-benzothienyl)-iodoniumhexafluorophosphat, Diaryliodoniumtristrifluormethylsulfonylmethid wie Diphenyliodoniumhexafluoroantimonat, Diaryliodoniumtetrakis-(pentafluorophenyl)-borat wie Diphenyliodoniumtetrakis-(pentafluorophenyl)-borat,, (4-n-Desiloxyphenyl)-phenyliodoniumhexafluoroantimonat, [4-(2-Hydroxy-n-tetradesiloxy)-phenyl]-phenyliodoniumhexafluoroantimonat, [4-(2-Hydroxy-n-tetradesiloxy)-phenyl]-phenyliodoniumtrifluorosulfonat, [4-(2-Hydroxy-n-tetradesiloxy)-phenyl]-phenyliodoniumhexafluorophosphat, [4-(2-Hydroxy-n-tetradesiloxy)-phenyl]-phenyliodoniumtetrakis-(pentafluorophenyl)-borat, Bis-(4-tert-butylphenyl)-iodoniumhexafluoroantimonat, Bis-(4-tert-butylphenyl)-iodoniumhexafluorophosphat, Bis-(4-tert-butylphenyl)-iodoniumtrifluorosulfonat, Bis-(4-tert-butylphenyl)-iodoniumtetrafluoroborat, Bis-(dodecylphenyl)-iodoniumhexafluoroantimonat, Bis-(dodecylphenyl)-iodoniumtetrafluoroborat, Bis-(dodecylphenyl)-iodoniumhexafluorophosphat, Bis-(dodecylphenyl)-iodoniumtrifluoromethylsulfonat, Di-(dodecylphenyl)-iodoniumhexafluoroantimonat, Di-(dodecylphenyl)-iodoniumtriflat,
   Diphenyliodoniumbisulfat, 4,4'-Dichlorodiphenyliodoniumbisulfat, 4,4'-Dibromodiphenyliodoniumbisulfat, 3,3'-Dinitrodiphenyliodoniumbisulfat, 4,4'-Dimethyldiphenyliodoniumbisulfat, 4,4'-Bis-succinimidodiphenyliodoniumbisulfat, 3-Nitrodiphenyliodoniumbisulfat, 4,4'-Dimethoxydiphenyliodoniumbisulfat, Bis-(dodecylphenyl)-iodoniumtetrakis-(pentafluorophenyl)-borat, (4-Octyloxyphenyl)-phenyliodoniumtetrakis-(3,5-bis-trifluoromethylphenyl)-borat und (Tolylcumyl)-iodoniumtetrakis-(pentafluorophenyl)-borat,
und
- Ferrocenium-Salze (siehe zum Beispiel EP 0 542 716 B1) wie η5-(2,4-cyclopentadien-1-yl)-[(1,2,3,4,5,6,9)-(1-methylethyl)-benzol]-eisen.

Beispiele für kommerzialisierte Photoinitiatoren sind Cyracure UVI-6990, Cyracure UVI-6992, Cyracure UVI-6974 und Cyracure UVI-6976 der Firma Union Carbide, Optomer SP-55, Optomer SP-150, Optomer SP-151, Optomer SP-170 und Optomer SP-172 der Firma Adeka, San-Aid SI-45L, San-Aid SI-60L, San-Aid SI-80L, San-Aid SI-100L, San-Aid SI-110L, San-Aid SI-150L und San-Aid SI-180L der Firma Sanshin Chemical, SarCat CD-1010, SarCat CD-1011 und SarCat CD-1012 der Firma Sartomer, Degacure K185 der Firma Degussa, Rhodorsil Photoinitiator 2074 der Firma Rhodia, CI-2481, CI-2624, CI-2639, CI-2064, CI-2734, CI-2855, CI-2823 und CI-2758 der Firma Nippon Soda, Omnicat 320, Omnicat 430, Omnicat 432, Omnicat 440, Omnicat 445, Omnicat 550, Omnicat 550 BL und Omnicat 650 der Firma IGM Resins, Daicat II der Firma Daicel, UVAC 1591 der Firma Daicel-Cytec, FFC 509 der Firma 3M, BBI-102, BBI-103, BBI-105, BBI-106, BBI-109, BBI-110, BBI-201, BBI, 301, BI-105, DPI-105, DPI-106, DPI-109, DPI-201, DTS-102, DTS-103, DTS-105, NDS-103, NDS-105, NDS-155, NDS-159, NDS-165, TPS-102, TPS-103, TPS-105, TPS-106, TPS-109, TPS-1000, MDS-103, MDS-105, MDS-109, MDS-205, MPI-103,, MPI-105, MPI-106, MPI-109, DS-100, DS-101, MBZ-101, MBZ-201, MBZ-301, NAI-100, NAI-101, NAI-105, NAI-106, NAI-109, NAI-1002, NAI-1003, NAI-1004, NB-101, NB-201, NDI-101, NDI-105, NDI-106, NDI-109, PAI-01, PAI-101, PAI-106, PAI-1001, PI-105, PI-106, PI-109, PYR-100, SI-101, SI-105, SI-106 und SI-109 der Firma Midori Kagaku, Kayacure PCI-204, Kayacure PCI-205, Kayacure PCI-615, Kayacure PCI-625, Kayarad 220 und Kayarad 620, PCI-061T, PCI-062T, PCI-020T, PCI-022T der Firma Nippon Kayaku, TS-01 und TS-91 der Firma Sanwa Chemical, Deuteron UV 1240 der Firma Deuteron, Tego Photocompound 1465N der Firma Evonik, UV 9380 C-D1 der Firma GE Bayer Silicones, FX 512 der Firma Cytec, Silicolease UV Cata 211 der Firma Bluestar Silicones und Irgacure 250, Irgacure 261, Irgacure 270, Irgacure PAG 103, Irgacure PAG 121, Irgacure PAG 203, Irgacure PAG 290, Irgacure CGI 725, Irgacure CGI 1380, Irgacure CGI 1907 und Irgacure GSID 26-1 der Firma BASF.

Dem Fachmann sind weitere Systeme bekannt, die ebenfalls erfindungsgemäß einsetzbar sind. Photoinitiatoren werden unkombiniert oder als Kombination von zwei oder mehreren Photoinitiatoren eingesetzt.

Nach einer besonders bevorzugten Ausführungsform des erfindungsgemäßen Klebebandes enthält der Photoinitiator C eine Verbindung, deren Anionen Tetrakis(pentafluorophenyl)borat ist. Der Photoinitiator C kann auch aus wenigstens einer solchen Verbindung bestehen. Verbindungen mit dem vorgenannten Anion sind besonders vorteilhaft, da ein solcher Photoinitiator eine deutlich erhöhte Dunkelreaktion liefert, das Klebeband also nach Strahlenexposition schneller aushärtet. Überaschenderweise kann trotz der Verwendung derart schneller Photoinitiatoren eine vergleichsweise lange Offenzeit von wenigstens drei Minuten, insbesondere wenigstens fünf Minuten erreicht werden, was - ohne an eine Theorie gebunden zu sein - auf das Zusammenwirken dieser speziellen Photoinitiatoren und der erfindungsgemäßen Filmbildner-Komponente mit wenigstens einem Polyurethan-Polymer zurückgeführt wird.

Die strahlenaktivierbare polymerisierbare Zusammensetzung enthält erfindungsgemäß 0,1 bis 10 Gew.-Teile an wenigstens einem Photoinitiator C, insbesondere 0,25 bis 7,5 Gew.-Teile, bevorzugt 0,5 bis 5 Gew.-Teile.

Ein besonders bevorzugtes Klebeband der vorliegenden Erfindung enthält oder besteht aus einer strahlenaktivierbaren polymerisierbaren Zusammensetzung mit folgenden Bestandteilen:
A 5 bis 60 Gew.-Teile, bevorzugt 15 bis 40 Gew.-Teile, der wenigstens einen Filmbildner-Komponente und/oder
B 40 bis 95 Gew.-Teile, bevorzugt 60 bis 85 Gew.-Teile, der wenigstens einen Epoxid-Komponente und/oder
C 0,1 bis 10 Gew.-Teile, bevorzugt 0,5 bis 5 Gew.-Teile, des wenigstens einen Photoinitiators und/oder
optional D 0,1 bis 200 Gew.-Teile, bevorzugt 10 bis 100 Gew.-Teile, des wenigstens einen Zusatzstoffs
enthält oder daraus besteht, wobei sich die Gew.-Teile der Komponente A und B zu 100 ergänzen.

Das erfindungsgemäße Klebeband zeichnet sich vorzugsweise dadurch aus, dass die strahlenaktivierbare polymerisierbare Zusammensetzung nach der Strahlenaktivierung eine Dunkelreaktion zeigt und insbesondere eine offene Zeit von wenigstens einer Minute nach Exposition mit UV-Licht besitzt, vorzugsweise eine offene Zeit von 1 bis 5 Minuten, wobei die Dunkelreaktion bei einer Temperatur von 25 °C insbesondere nach 24 Stunden abgeschlossen ist. Eine Reaktion im Sinne dieser Erfindung wird als "abgeschlossen" bezeichnet, wenn die Verklebungsfestigkeit nach 24h wenigstens 2 MPa beträgt.

Erfindungsgemäß ist vorgesehen, dass das Klebeband durch die strahlenaktivierbare polymerisierbare Zusammensetzung gebildet wird, also im Wesentlichen hieraus besteht. Ebenso kann vorgesehen sein, dass das Klebeband beispielsweise wenigstens eine Trägerschicht umfasst. Bei einer solchen Trägerschicht kann im Prinzip jedes Material eingesetzt werden, welches dem Durchschnittsfachmann im Bereich der Herstellung von Klebebändern bekannt ist. Hierfür kommen beispielsweise Polymer-Folien oder textile Flächengebilde aus beispielsweise Glas-, Polymer-, Quarz-, Metall-, Kohle- und / oder natürlichen Fasern in Betracht. Eine solche Trägerschicht ist vorzugsweise innerhalb des Klebebandes, also nicht an den Hauptflächen angrenzend positioniert, damit die für die Verklebung relevanten Oberflächen des Klebebandes im Wesentlichen durch die strahlenaktivierbare polymerisierbare Zusammensetzung gebildet sind, also an der Verklebung vollflächig teilnehmen können.

### Zusatzstoffe D

Als Zusatzstoffe D kommen sämtliche dem Fachmann bekannte Zusatzstoffe für Klebebänder und Haftklebemassen in Betracht, wie beispielsweise Klebharze, sogenannte tackifier, Polymere, Rheologiemodifizierer, Schäumungsmittel, Füllstoffe, Adhäsionsvermittler, Polyole, Alterungsschutzmittel, Lichtschutzmittel, Farbstoffe, Schlagzähmodifizierer, Phenoxyharze oder Mischungen von diesen.

Als polymere Zusatzstoffe kommen insbesondere Elastomere oder Thermoplaste in Betracht. Auch Mischungen verschiedener Polymere können eingesetzt werden.

Beispiele für Elastomere wie sie im Bereich der Haftklebemassen üblicherweise verwendet werden, sind unter anderem in dem "Handbook of Pressure Sensitive Adhesive Technology" von Donatas Satas (Satas & Associates, Warwick 1999), beschrieben. Einsetzbar sind bespielsweise Elastomere auf der Basis von Acrylaten und/oder Methacrylaten, Polyurethanen, Naturkautschuken, Synthesekautschuken wie Butyl-, (Iso)Butyl-, Nitril- oder Butadienkautschuke, Styrolblockcopolymeren mit einem Elastomerblock aus ungesättigten oder teilweise oder vollständig hydrierten Polydienblöcken (Polybutadien, Polyisopren, Poly(iso)butylen, Copolymeren aus diesen sowie weitere, dem Fachmann geläufige Elastomerblöcke), Polyolefinen, Fluorpolymeren und/oder Silikonen.

Als Thermoplaste können beispielsweise solche Polymere zum Einsatz kommen, wie sie in den Lehrbüchern "Chemie und Physik der synthetischen Polymere" von J.M.G. Cowie (Vieweg, Braunschweig) und "Makromolekulare Chemie" von B. Tieke (VCH Weinheim, 1997) genannt sind. Dies sind zum Beispiel Poly(ethylen), Poly (propylen), Poly (vinylchlorid), Poly (styrol), Poly (oxymethylene), Poly (ethylenoxid), Poly (ethylenterephthalat), Poly (carbonate), Poly (phenylenoxide), Poly (urethane), Poly(harnstoffe), Acrylnitril-Butadien-Styrol (ABS), Poly(amide) (PA), Poly (lactat) (PLA), Poly (etheretherketon) (PEEK), Poly (sulfon) (PSU), Poly (ethersulfon) (PES). Poly (acrylate), Poly (methacrylate) und Poly (methylmethacrylate) (PMMA) sind zwar als Polymer ebenfalls möglich, jedoch nicht bevorzugt im Sinne der vorliegenden Erfindung.

Die Auswahl der Polymerkomponente ist abhängig vom gewählten Epoxidsystem. Werden polare Epoxide (häufig durch Reaktion von Alkoholen mit Epichlorhydrin hergestellt, wie beispielsweise das Reaktionsprodukt aus Bisphenol-A und Epichlorhydrin) verwendet, sind insbesondere polarere Polymere bevorzugt. Diese umfassen sowohl Elastomere wie Acrilnitril-Butadien-Kautschuke als auch Thermoplasten wie Poly (ethylenoxid), Poly (ethylenterephthalat), Poly (carbonate), Poly (phenylenoxide), Poly (urethane), Poly(harnstoffe), Poly(amide) (PA), Poly (lactat) (PLA), Poly (etheretherketon) (PEEK), Poly (sulfon) (PSU) und Poly (ethersulfon) (PES).

Für unpolarere Epoxide wie beispielsweise Dicyclopentadiendiepoxid sind unpolarere Polymere bevorzugt. Diese sind beispielsweise Poly (Styrol), Styrolblockcopolymere mit einem Elastomerblock aus ungesättigten oder teilweise oder vollständig hydrierten Polydienblöcken (Polybutadien, Polyisopren, Poly(iso)butylen, Copolymeren aus diesen sowie weitere, dem Fachmann geläufige Elastomerblöcke) oder thermoplastische Polyolefine, Fluorpolymere und/oder Silikonen.

Um Klebebänder mit besonders hohen Epoxidgehalten zu erhalten, eignen sich besonders alle Polymere, die nicht intrinsisch haftklebrig sind also nicht das Dahlquist Kriterium bei Raumtemperatur erfüllen (vgl. J. Adhesion, 1991, Vol. 34, pp. 189-200 oder C. A. Dahlquist: Tack, adhesion, fundamentals and pra.ctice, McLaren and Sons Ltd., London, 1966). Dies gilt sowohl für die Polymerkomponente wie auch die Mischung aus Polymer und Klebharz, so ein solches zum Einsatz kommt.

Besonders vorteilhafte Polymere für sehr hohe Verklebungsfestigkeiten sind Poly (amide), Polyurethane und Poly (harnstoffe), Poly (etheretherketon) (PEEK), Poly (sulfon) (PSU) und Poly (ethersulfon) (PES).

Kommen Polyurethane zum Einsatz, so haben sich diese als besonders vorteilhaft für gute Klebkräfte im unausgehärteten Zustand gezeigt, wenn das Polyurethan teilkristallin ist und in der DSC Messung einen Schmelze- oder Kristallisationspeak aufweist, der einer Schmelzenthalpie von mindestens 5 J/g, bevorzugt von 20 J/g und besonders bevorzugt von 40 J/g entspricht.

Die Polymere der Polymermischung können von linearer, verzweigter, sternförmiger oder gepfropfter Struktur sein, um nur einige Beispiele zu geben, und als Homopolymer, als statistisches Copolymer, als alternierendes oder als Blockcopolymere aufgebaut sein. Die Bezeichnung "statistisches Copolymer" beinhaltet im Sinne dieser Erfindung nicht nur solche Copolymere, in denen die bei der Polymerisation eingesetzten Comonomere rein statistisch eingebaut sind, sondern auch solche, bei denen Gradienten in der Comonomerzusammensetzung und/oder lokale Anreicherungen einzelner Comonomersorten in den Polymerketten vorkommen. Einzelne Polymerblöcke können als Copolymerblock (statistisch oder alternierend) aufgebaut sein.

Für die vorliegende Erfindung können Klebharze verwendet werden, jedoch ist für die Klebemassen der vorliegenden Erfindung ein Klebharz entbehrlich. Es wird auch ohne Klebharzzusatz die gewünschte Haftklebrigkeit der Klebemasse erreicht.

Sofern Klebharze zum Einsatz kommen, sind hierfür Klebharze, wie sie dem Fachmann zum Beispiel aus dem Satas bekannt sind, geeignet. Dabei kann die Haftklebemasse zumindest eine Sorte eines vorzugsweise zumindest teilhydrierten Klebharzes, z.B, solche, die mit der Elastomerkomponente beziehungsweise, sofern ein aus Hart- und Weichblöcken aufgebautes Copolymer eingesetzt wird, hauptsächlich mit dem Weichblock verträglich sind (Weichharze) enthalten.

Ein entsprechendes Klebharz kann eine Erweichungstemperatur gemessen mittels Ring&Ball-Methode von größer 25 °C sowie ergänzend zumindest eine Sorte Klebharz mit einer Erweichungstemperatur von kleiner 20 °C aufweisen. Hierüber kann, falls erforderlich, zum einen das klebtechnische Verhalten, zum anderen aber auch das Auffließverhalten auf dem Verklebungsuntergrund feineingestellt werden.

Für eher unpolare Elastomere können als Harze in der Haftklebemasse partiell oder vollständig hydrierte Harze auf Basis von Kolophonium und Kolophoniumderivaten, hydrierte Polymerisate des Dicyclopentadiens, partiell, selektiv oder vollständig hydrierte Kohlenwasserstoffharze auf Basis von C₅-, C₅/C₉- oder C₉-Monomerströmen, Polyterpenharze auf Basis von α-Pinen und/oder ß-Pinen und/oder δ-Limonen und/oder Δ³-Caren, hydrierte Polymerisate von bevorzugt reinen C₈- und C₉-Aromaten. Vorgenannte Klebharze können sowohl allein als auch im Gemisch eingesetzt werden.

Dabei können sowohl bei Raumtemperatur feste als auch flüssige Harze zum Einsatz kommen. Um eine hohe Alterungs- und UV-Stabilität zu gewährleisten, sind hydrierte Harze mit einem Hydrierungsgrad von mindestens 90 %, vorzugsweise von mindestens 95 % bevorzugt.

Als Füllstoffe können beispielsweise Kreiden, Kaoline und Silikate verwendet werden. Geeignete thixotropierende Füllstoffe sind Aerosil und Socal-Kreiden. Die verwendeten Mengen sind so zu wählen, dass die zur Aushärtung benötigte UV-Strahlung noch ausreichend tief in die Verklebung eindringen kann.

Als weitere Additive können typischerweise genutzt werden:
- Plastifizierungsmittel wie zum Beispiel Weichmacheröle, oder niedermolekulare flüssige Polymere, wie zum Beispiel niedermolekulare Polybutene, vorzugsweise mit einem Anteil von 0,2 bis 5 Gew.-% bezogen auf das Gesamtgewicht der Haftklebemasse
- primäre Antioxidantien wie zum Beispiel sterisch gehinderte Phenole, vorzugsweise mit einem Anteil von 0,2 bis 1 Gew.-% bezogen auf das Gesamtgewicht der Haftklebemasse
- sekundäre Antioxidantien, wie zum Beispiel Phosphite oder Thioether, vorzugsweise mit einem Anteil von 0,2 bis 1 Gew.-% bezogen auf das Gesamtgewicht der Haftklebemasse
- Prozessstabilisatoren wie zum Beispiel C-Radikalfänger,
   vorzugsweise mit einem Anteil von 0,2 bis 1Gew.-% bezogen auf das Gesamtgewicht der Haftklebemasse
- Verarbeitungshilfsmittel,
   vorzugsweise mit einem Anteil von 0,2 bis 1 Gew.-% bezogen auf das Gesamtgewicht der Haftklebemasse
- Endblockverstärkerharze,
   vorzugsweise mit einem Anteil von 0,2 bis 10 Gew.-% bezogen auf das Gesamtgewicht der Haftklebemasse sowie
gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine, vorzugsweise mit einem Anteil von 0,2 bis 10 Gew.-% bezogen auf das Gesamtgewicht der Haftklebemasse.

Die strahlenaktivierbare polymerisierbare Zusammensetzung enthält erfindungsgemäß optional 0,1 bis 200 Gew.-Teile an wenigstens einem Zusatzstoff D, insbesondere 50 bis 150 Gew.-Teile, bevorzugt 10 bis 100 Gew.-Teile.

Ein weiterer Gegenstand der vorliegenden Erfindung betrifft ein Verfahren zum Zusammenfügen von zwei Bauteilen mittels eines erfindungsgemäßen Klebebandes, bei dem das Klebeband auf das erste Bauteil aufgebracht und anschließend zur Aktivierung der Polymerisation mit einer Strahlung geeigneter Wellenlänge bestrahlt und das zweite Bauteil aufgelegt wird, wobei die Polymerisation zum endgültigen Fügen der beiden Bauteile als Dunkelreaktion und insbesondere ohne zusätzlichen thermischen Energieeintrag von außen abläuft.

Das erfindungsgemäße Verfahren ermöglicht auch die Verklebung von für UV-Licht im Wesentlichen undurchlässige Substrate, da das erfindungsgemäße Klebeband nach der Aktivierung durch beispielsweise UV- oder andere hochenergetische Strahlung anschließend auch nach Wegnahme der Strahlung weiterreagiert, also eine Dunkelreaktion zeigt. Insofern ist es nicht erforderlich, das Klebeband bis zu seiner endgültigen Durchhärtung zu bestrahlen, weshalb auch für UV-Licht oder andere Strahlungsquellen undurchlässige Materialien miteinander verklebt werden können. Folglich zeichnet sich eine vorteilhafte Ausgestaltung des erfindungsgemäßen Verfahrens dadurch aus, dass die Bauteile bei einer Materialdicke von 1 cm eine UV-Durchlässigkeit von weniger als 1 % besitzen, insbesondere nahezu 0 %.

Ein weiterer Gegenstand der vorliegenden Erfindung ist die Verwendung eines erfindungsgemäßen Klebebandes zum Zusammenfügen zweier Bauteile, insbesondere zweier Bauteile, die bei einer Materialdicke von 1 cm eine UV-Durchlässigkeit von weniger als 1 % besitzen.

Die erfindungsgemäßen Klebebänder können in verschiedenen Bereichen eingesetzt werden. Beispielhaft seien Anwendungen im Automobilbereich, beispielsweise das Verkleben von Punkthaltern z.B. zur Befestigung von Sensoren oder Rückspiegeln an Glasscheiben genannt. Des Weiteren sind Anwendungen im Elektronikbereich, beispielsweise Verklebungen in tragbaren Geräten wie Mobiltelefonen oder Tablets möglich. Auch zum Verkleben von Punkthaltern in anderen Bereichen wie zum Beispiel für Sichtblenden an Dunstabzugshauben, Treppengeländern oder im Compositbau sind die erfindungsgemäßen Klebebänder einsetzbar.

Die vorliegende Erfindung wird im Folgenden anhand von Ausführungsbeispielen näher erörtert.

### Beispiele

### Messmethoden

### Viskosität

Die Fließfähigkeit des fluiden Beschichtungsmaterials wird über die dynamische Viskosität ermittelt. Die dynamische Viskosität wird vorliegend in einem Zylinderrotationsviskosimeter mit einer Standardgeometrie nach DIN 53019-1 (2008-09) bestimmt. Die Viskosität wird bei einer Messtemperatur von 25 °C und einer Schergeschwindigkeit 1 x s⁻¹ gemessen. Als Fluid wird eine Substanz mit einer Viskosität von weniger als 500 Pa·s bezeichnet.

### Molekulargewicht:

Die Molekulargewichtsbestimmungen der zahlenmittleren Molekulargewichte Mₙ und der gewichtsmittleren Molekulargewichte M_{w} erfolgten mittels Gelpermeationschromatographie (GPC). Als Eluent wurde THF (Tetrahydrofuran) mit 0,1 Vol.-% Trifluoressigsäure eingesetzt. Die Messung erfolgte bei 25 °C. Als Vorsäule wurde PSS-SDV, 5 µ, 10³Å, ID 8,0 mm x 50 mm verwendet. Zur Auftrennung wurden die Säulen PSS-SDV, 5 µ, 10³ sowie 10⁵ und 10⁶ mit jeweils ID 8,0 mm x 300 mm eingesetzt. Die Probenkonzentration betrug 4 g/l, die Durchflussmenge 1,0 ml pro Minute. Es wurde gegen Polystyrol-Standards gemessen.

### Klebkraft:

Die Klebkräfte auf Stahl wurden analog ISO 29862:2007 (Methode 3) bei 23 °C und 50 % relativer Luftfeuchte bei einer Abzugsgeschwindigkeit von 300 mm/min und einem Abzugswinkel von 180° bestimmt. Als Verstärkungsfolie wurde eine geätzte PET-Folie mit einer Dicke von 36 µm verwendet, wie sie von der Firma Coveme (Italien) erhältlich ist. Die Verklebung eines 2cm breiten Messtreifens wurde dabei mittels einer Anrollmaschine mit 4 kg bei einer Temperatur von 23 °C vorgenommen. Die Klebebänder wurden sofort nach der Applikation abgezogen. Der Messwert (in N/cm) ergab sich als Mittelwert aus drei Einzelmessungen.

### Verklebungsfestigkeit:

Als Kenngröße für die Qualität der erzielten Verklebung wurde die Verklebungsfestigkeit eines nach dem erfindungsgemäßen Verfahren hergestellten Verbunds für die unterschiedlichen Klebebänder ermittelt. Hierzu wurde die Verklebungsfestigkeit in einem dynamischen Zugscherversuch in Anlehnung an DIN-EN 1465 bei 23 °C und 50 % rF für eine Prüfgeschwindigkeit von 10 mm/min jeweils quantitativ bestimmt (Ergebnisse in N/mm²=MPa). Als Prüfstäbe kamen solche aus Stahl zum Einsatz, welche vor der Verklebung mit Aceton gereinigt wurden. Die Schichtdicken der Klebebänder entsprachen jeweils den folgenden Angaben. Angegeben ist der Mittelwert aus drei Messungen. Die Härtungsreaktion wurde vor der Verklebung des zweiten Stahlsubstrates mit UV-Licht aktiviert (Dosis: > 80 mJ/cm2, Lampentyp: undotierter Quecksilberstrahler). Die Messung erfolgte 24h nach der Aktivierung.

### Offenzeit:

Die Offenzeit wurde über die Änderung der Verklebungsfestigkeit bestimmt. Dazu wurden Testsubstrate wie vorstehend im Abschnitt "Verklebungsfestigkeit" präpariert und das Klebeband auf das erste Substrat verklebt. Nach der Bestrahlung wurde die Zeit bis zur Fügung des zweiten Substrates variiert. Die Offenzeit ist diejenige Zeit, bei der die gemessene Verklebungsfestigkeit 90% der Verklebungsfestigkeit für ein unmittelbar nach der Bestrahlung verklebtes Substrat unterschreitet. Die benötigte Zeit zur Fügung beträgt etwa 30 Sekunden und wird hiervon abgezogen.

### Verwendete Rohstoffe

- Desmomelt 530: Weitgehend lineares Hydroxylpolyurethan. Desmomelt 530 ist ein stark kristallisierendes, elastisches Polyurethan sehr geringer Thermoplastizität der Firma Covestro. Die Schmelzenthalpie gemessen mit DSC beträgt 54,7 J/g.
- Oppanol B 150: Polyisobutylen (PIB) von BASF, Mn = 425.000 g/mol
- Polyacrylat 1: Haftklebriges Acrylatcopolymer aus 2-Hydroxyethylacrylat, 2 Ethylhexylacrylat und C-17-Acrylat, Mₙ = 884000 g / mol
- Araldite ECN 1299: Festes Epoxy-Kresol-Novolak der Firma Huntsman mit einer Erweichungstemperatur (DIN519219) 85 - 100 °C
- Epon Resin 828: Difunktionelles Bisphenol-A / epichlorhydrin Flüssigepoxid mit einem Gewicht pro Epoxid von 185 - 192 g/eq der Firma Momentive. Viskosität bei 25°C von 12 - 14 Pa s.
- Uvacure 1500: Flüssiges cycloaliphatisches Diepoxid der Firma Dow mit einem Schmelzpunkt von -37 °C und einer Viskosität bei 23°C von 0,25 Pa s. (3,4-Epoxycyclohexylmethyl 3,4-epoxycyclohexanecarboxylate, CAS: 2386-87-0)
- Irgacure PAG 290: kationischer Fotoinitiator der Firma BASF. Das Gegenion ist ein Tetrakis (Pentafluorophenyl) borat Anion.
- Triarylsulfonium: kationischer Fotoinitiator von der Firma Sigma-Aldrich (CAS:
- hexafluoroantimonat: 109037-75-4). Der Photoinitiator weist ein Absorptionsmaximum im Bereich 320 nm bis 360 nm auf und lag als 50 Gew.-%-ige Lösung in Propylencarbonat vor.
- Triarylsulfonium hexafluorophosphat: kationischer Fotoinitiator der Firma Sigma-Aldrich (CAS: 109037-77-6) Der Photoinitiator weist ein Absorptionsmaximum im Bereich 320 nm bis 360 nm auf und lag als 50 Gew.-%-ige Lösung in Propylencarbonat vor.

### Herstellung Polyacrylat 1

Ein für radikalische Polymerisationen konventioneller 2 L Glasreaktor wurde mit 40 g 2-N-tert. Butylacrylamid, 240 g 2 Ethylhexylacrylat, 120 g C17-Acrylat (dreifach verzweigte Seiten mit C3-, C4-Kettensegmenten, BASF SE), 133 g Siedegrenzbenzin 69/95 und 133 g Aceton befüllt. Nachdem 45 Minuten Stickstoffgas unter Rühren durch die Reaktionslösung geleitet worden war, wurde der Reaktor auf 58 °C geheizt und 0,2 g Vazo 67 (Firma DuPont) hinzugegeben. Anschließend wurde das äußere Heizbad auf 75 °C erwärmt und die Reaktion konstant bei dieser Außentemperatur durchgeführt. Nach 1 h Reaktionszeit wurden 50 g Toluol hinzugegeben. Nach 2.5 h wurde mit 100 g Aceton verdünnt. Nach 4 h Reaktionszeit wurden nochmals 0,2 g Vazo 67 hinzugegeben. Nach 7 h Polymerisationszeit wurde mit 100 g Siedegrenzbenzin 60/95, nach 22 h mit 100 g Aceton verdünnt. Nach 24 h Reaktionszeit wurde die Polymerisation abgebrochen und das Reaktionsgefäß auf Raumtemperatur abgekühlt. Das Molekulargewicht Mₙ betrug 884.000 g/mol.

### Herstellung der Haftklebemassen

Die Herstellung der Haftklebemassen erfolgte im Labor durch Lösen des jeweiligen Polymers in Butanon bei 23 °C. Anschließend wurde das/wurden die Reaktivharz(e) zugegeben. Im Anschluss wurde der UV-Initiator mittels Rühren zugegeben.

Zur Herstellung von Klebemasseschichten, also der trägerlosen (Haft-)Klebebänder, wurden die verschiedene Klebemassen aus einer Lösung auf einen konventionellen Liner (silikonisierte Polyesterfolie) mittels eines Laborstreichgeräts aufgebracht und getrocknet. Die Klebemassenschichtdicke nach dem Trocknen beträgt 100 ± 10 µm. Die Trocknung erfolgte jeweils zunächst bei RT für 10 Minuten und 10 Minuten bei 105 °C in einem Labortrockenschrank. Die getrockneten Klebemasseschichten wurden jeweils unverzüglich nach dem Trocknen mit einem zweiten Liner (silikonisierte Polyesterfolie mit geringerer Trennkraft) auf der offenen Seite laminiert.

Aus den vorgenannten Komponenten wurden die folgenden erfindungsgemäßen Klebebänder K1-K4, sowie zum Vergleich Klebebänder V1 bis V4 erzeugt. Dabei wurde das Klebeband V4 in Anlehnung an die EP 1 518 912 A1 erstellt mit einem darin als bevorzugt angegebenen Polyester 1. Dabei handelt es sich um den in Beispiel 12 der EP 1 518 912 A1 verwendeten Polyester, der über Copolymerisation von 25 Mol-% Terephthalsäure, 25 Mol-% Isophthalsäure, Ethylenglycol, 17,5 Mol-% Neopentylglycol, 17,5 Mol-% Ethyleneglycol Addukt von Bisphenol A und 25 Mol-% Tetramethylenetherglycol erhalten wurde.

### Zusammensetzung der Haftklebemassen, Offenzeit und Verklebungsfestigkeit

In der folgenden Tabelle sind die Zusammensetzungen der Klebebänder sowie deren Offenzeit und Verklebungsfestigkeit zusammengefasst, wobei die Mengenangaben Gewichtsteile bezeichnen:

| | | **K1** | **K2** | **K3** | **K4** | **V1** | **V2** | **V3** | **V4** |
|---|---|---|---|---|---|---|---|---|---|
| | | | | | | | | | |
| **Matrix** | Desmomelt 530 | 20 | 20 | 20 | 20 | | | | |
| | Oppanol B 150 | | | | | 20 | | | |
| | Polyacrylat 1 | | | | | | 20 | 20 | |
| | Polyester 1 | | | | | | | | 20 |
| | | | | | | | | | |
| **Epoxy Resin** | | | | | | | | | |
| | Epon Resin 828 | 40 | 40 | 40 | | 40 | 40 | | 80 |
| | Araldite ECN 1299 | 40 | 40 | 40 | 40 | 40 | 40 | 40 | |
| | Uvacure 1500 | | | | 40 | | | 40 | |
| | | | | | | | | | |
| **Initiator** | Irgacure PAG 290 | 1 | | | 1 | 1 | 1 | 1 | |
| | Triarylsulfonium hexafluoroantimo nat | | 1 | | | | | | 1 |
| | Triarylsulfonium hexafluorophosp hat | | | 1 | | | | | |
| | | | | | | | | | |
| **Bewertun 9** | Offenzeit / Minuten | 5 | 11 | 18 | 1 | unendlich | 0 | 0 | 0 |
| | Verklebunsfestig keit / MPa | 6,2 | 4,5 | 2,7 | 5,6 | << 1MPa | n.m. | n.m. | n-m. |
| | Klebkraft ungehärtet (Stahl) / N/cm | 6,1 (A) | 5,9 (A) | 6,7 (A) | 4,3 (A) | (K) | (K) | (K) | 3,6 (A) |

| | | | | | | | | | |
|---|---|---|---|---|---|---|---|---|---|
| * A: Adhäsionsbruch, K: Kohäsionsbruch; ** n.m. nicht messbar, da Aushärtung zu schnell, um 2. Substrat zu fügen | | | | | | | | | |

Die erfindungsgemäßen Klebebänder mit den Klebemassen K1 - K2 haben nach Aktivierung mit UV-Licht eine Offenzeit von 5 Minuten oder mehr. Im Gegensatz dazu hat eine vergleichbare Klebmasse V1 ohne Polyurethan-Komponente - dafür mit Polyisobutylen - eine unendliche Offenzeit, da es zu keiner Aushärtung kommt. Vermutlich lassen sich die sehr polaren Photoinitiatorsalze nicht ausreichend gut in der durch das PiB sehr unpolaren Matrix lösen, sodass es nicht zu einer außreichenden Aushärtung kommt. Außerdem ist die Klebmasse aufgrund der großen Polaritätsunterschiede des PiB und den Epoxiden nicht homogen.

V2 enthält im Vergleich zu K1 anstelle des Polyurethans ein Polyacrylat. Hier ist die Aushärtung so schnell, dass bereits nach wenigen Sekunden die Oberfläche verfilmt und eine Fügung des zweiten Substrates nicht mehr möglich ist (keine Offenzeit).

Die Haftklebmasse V4 (In Anlehnung an EP 1 518 912 A1 Beispiele 12 und 13) besitzt zwar eine vergleichbare Zusammensetzung wie K1 (20% Filmbildner, 80% Epoxidkomponente) setzt jedoch einen Polyester als Filmbildner ein. V4 zeigt jedoch keine Offenzeit. Und das, obwohl ein Photoinitiator verwendet wird, dessen Härtungskinetik deutlich langsamer als die des in K1 verwendeten tetrakis pentafluorophenyl borates ist.

Im Vergleich von K1, K2, K3 und K4 wird deutlich, dass zwar mit allen Initiatoren in Kombination mit dem erfindungsgemäßen Filmbildner ausreichend lange Offenzeiten erreicht werden. K1 erreicht in diesem Vergleich deutlich höhere Verklebungsfestigkeiten, da es wahrscheinlich zu einer besseren Aushärtung kommt. Da sich zumindest K1 bis K3 nur im Initiator unterscheiden, ist damit gezeigt, dass Photoinitiatoren mit Tetrakis (Pentafluorophenyl) borat Anion in Kombination mit der erfindungsgemäßen Filmbildnerkomponente A besonders geeignet sind.

Das cyclische Epoxide 3,4-Epoxycyclohexylmethyl 3,4-epoxycyclohexanecarboxylate ist wegen seiner hohen Reaktivität besonders gut geeignet für die kationische Härtung. K3 enthält zu 40 Teilen ein solches Epoxid. Obwohl der Initiator mit dem schnellsten Gegenion (PAG 290) verwendet wird, hat dieser Haftklebstoff nach der Aktivierung noch eine Offenzeit von etwas mehr als 1 Minute (in der Tabelle abgerundet). Im Gegensatz dazu hat V3 (Polyurethan wurde durch Polyacrylat ausgetauscht) keine Offenzeit.

## Patentansprüche

1. Haftklebriges Klebeband, enthaltend oder bestehend aus einer strahlenaktivierbaren polymerisierbaren Zusammensetzung enthaltend oder bestehend aus:
A 5 bis 60 Gew.-Teile wenigstens einer Filmbildner-Komponente;
B 40 bis 95 Gew.-Teile wenigstens einer Epoxid-Komponente;
C 0,1 bis 10 Gew.-Teile wenigstens eines Photoinitiators, sowie
D optional 0,1 bis 200 Gew.-Teile wenigstens eines Zusatzstoffs,
jeweils bezogen auf die strahlenaktivierbare polymerisierbare Zusammensetzung, wobei sich die Gew.-Teile der Komponente A und B zu 100 ergänzen,
**dadurch gekennzeichnet, dass**
die Filmbildner-Komponente A zumindest ein Polyurethan-Polymer umfasst oder daraus besteht.

2. Klebeband nach Anspruch 1, **dadurch gekennzeichnet, dass** das Polyurethan-Polymer der Filmbildner-Komponente A ein gewichtsmittleres Molekulargewicht M_{w} von wenigstens 40.000 g/mol aufweist, bestimmt über GPC mit Polystyrol als Standard gemäß der Messmethode in der Beschreibung, insbesondere wenigstens 50.000 g/mol, bevorzugt 75.000 bis 500000 g/mol.

3. Klebeband nach Anspruch 1 oder 2, **dadurch gekennzeichnet, dass** das Polyurethan-Polymer der Filmbildner-Komponente A ein lineares Polyurethan-Polymer ist.

4. Klebeband nach einem der vorstehenden Ansprüche, **dadurch gekennzeichnet, dass** das Polyurethan-Polymer der Filmbildner-Komponente A ein OH-funktionelles Polyurethan-Polymer ist.

5. Klebeband nach einem der vorstehenden Ansprüche, **dadurch gekennzeichnet, dass** die Epoxid-Komponente B mindestens 10 Gew.-% bei 25 °C flüssige Epoxidharze enthält, bezogen auf die Epoxid-Komponente B.

6. Klebeband nach einem der vorstehenden Ansprüche, **dadurch gekennzeichnet, dass** die Epoxid-Komponente B maximal 60 Gew.-% Epoxycyclohexyl-basierte Epoxidharze enthält, bezogen auf die Epoxid-Komponente B.

7. Klebeband nach einem der vorstehenden Ansprüche, **dadurch gekennzeichnet, dass** die Epoxid-Komponente B eine mittlere Funktionalität bezogen auf die EpoxidGruppen von wenigstens 1,5 bis 6,0 aufweist, insbesondere von 1,75 bis 4.

8. Klebeband nach einem der vorstehenden Ansprüche, **dadurch gekennzeichnet, dass** die Epoxid-Komponente B wenigstens zwei unterschiedliche Epoxidharze B1 und B2 enthält, von denen
a. das erste Epoxidharz B1 bei 25 °C eine dynamische Viskosität von weniger als 500 Pa*s aufweist, gemessen nach DIN 53019-1 (2008-09) bei einer Messtemperatur von 25 °C und einer Schergeschwindigkeit 1 x s⁻¹, und
b. von denen das zweite Epoxidharz B2 eine Erweichungstemperatur von wenigstens 45 °C oder bei 25 °C eine dynamische Viskosität von wenigstens 1000 Pa*s aufweist, gemessen nach DIN 53019-1 (2008-09) bei einer Messtemperatur von 25 °C und einer Schergeschwindigkeit 1 x s⁻¹,
wobei insbesondere der Anteil des ersten Epoxidharzes B1 10 bis 90 Gew.-%, bevorzugt 20 bis 75 Gew.-%und der Anteil des zweiten Epoxidharzes B2 10 bis 90 Gew.-%, bevorzugt 25 bis 80 Gew.-% beträgt, bezogen auf die Epoxidkomponente B.

9. Klebeband nach einem der vorstehenden Ansprüche, **dadurch gekennzeichnet, dass** der Photoinitiator C eine Verbindung enthält oder daraus besteht, deren Anion tetrakis(pentafluorophenyl)borat ist.

10. Klebeband nach einem der vorstehenden Ansprüche, **dadurch gekennzeichnet, dass** die strahlenaktivierbare polymerisierbare Zusammensetzung nach der Strahlenaktivierung eine Dunkelreaktion zeigt und insbesondere eine offene Zeit von wenigstens einer Minute nach Exposition mit UV-Licht gemäß der Messmethode in der Beschreibung besitzt, vorzugsweise eine offene Zeit von 1 bis 5 Minuten, wobei die Dunkelreaktion bei einer Temperatur von 25 °C insbesondere nach 24 Stunden abgeschlossen ist.

11. Klebeband nach einem der vorstehenden Ansprüche, **dadurch gekennzeichnet, dass** das Klebeband wenigstens eine Trägerschicht umfasst.

12. Verfahren zum Zusammenfügen von zwei Bauteilen mittels eines Klebebandes nach einem der Ansprüche 1 bis 11, **dadurch gekennzeichnet, dass** das Klebeband auf das erste Bauteil aufgebracht und anschließend zur Aktivierung der Polymerisation mit einer Strahlung geeigneter Wellenlänge bestrahlt und das zweite Bauteil aufgelegt wird, wobei die Polymerisation zum endgültigen Fügen der beiden Bauteile als Dunkelreaktion und insbesondere ohne zusätzlichen thermischen Energieeintrag von außen abläuft.

13. Verfahren nach Anspruch 12, **dadurch gekennzeichnet, dass** die Bauteile bei einer Materialdicke von 1 cm eine UV-Durchlässigkeit von weniger als 1% besitzen.

14. Verwendung eines Klebebandes nach einem der Ansprüche 1 bis 11 zum Zusammenfügen zweier Bauteile, insbesondere zweier Bauteile, die bei einer Materialdicke von 1 cm eine UV-Durchlässigkeit von weniger als 1% besitzen.

## Claims

1. Pressure-sensitive adhesive tape comprising or consisting of a radiation-activatable polymerizable composition comprising or consisting of:
A 5 to 60 parts by weight of at least one film former component;
B 40 to 95 parts by weight of at least one epoxy component;
C 0.1 to 10 parts by weight of at least one photoinitiator, and
D optionally 0.1 to 200 parts by weight of at least one additive,
based in each case on the radiation-activatable polymerizable composition, where the parts by weight of components A and B add up to 100,
**characterized in that**
the film former component A comprises or consists of at least one polyurethane polymer.

2. Adhesive tape according to Claim 1, **characterized in that** the polyurethane polymer of the film former component A has a weight-average molecular weight M_{w} of at least 40 000 g/mol, determined via GPC with polystyrene as standard by the test method in the description, especially at least 50 000 g/mol, preferably 75 000 to 500 000 g/mol.

3. Adhesive tape according to Claim 1 or 2, **characterized in that** the polyurethane polymer of the film former component A is a linear polyurethane polymer.

4. Adhesive tape according to any of the preceding claims, **characterized in that** the polyurethane polymer of the film former component A is an OH-functional polyurethane polymer.

5. Adhesive tape according to any of the preceding claims, **characterized in that** the epoxy component B contains at least 10% by weight of epoxy resins that are liquid at 25°C, based on the epoxy component B.

6. Adhesive tape according to any of the preceding claims, **characterized in that** the epoxy component B contains not more than 60% by weight of epoxycyclohexyl-based epoxy resins, based on the epoxy component B.

7. Adhesive tape according to any of the preceding claims, **characterized in that** the epoxy component B has an average functionality based on the epoxy groups of at least 1.5 to 6.0, especially of 1.75 to 4.

8. Adhesive tape according to any of the preceding claims, **characterized in that** the epoxy component B contains at least two different epoxy resins B1 and B2, of which
a. the first epoxy resin B1 has a dynamic viscosity at 25°C of less than 500 Pa*s, measured according to DIN 53019-1 (2008-09) at a measurement temperature of 25°C and a shear rate of 1 x s⁻¹, and
b. of which the second epoxy resin B2 has a softening temperature of at least 45°C or a dynamic viscosity at 25°C of at least 1000 Pa*s, measured according to DIN 53019-1 (2008-09) at a measurement temperature of 25°C and a shear rate of 1 x s⁻¹,
where, in particular, the proportion of the first epoxy resin B1 is 10% to 90% by weight, preferably 20% to 75% by weight, and the proportion of the second epoxy resin B2 is 10% to 90% by weight, preferably 25% to 80% by weight, based on the epoxy component B.

9. Adhesive tape according to any of the preceding claims, **characterized in that** the photoinitiator C contains or consists of a compound wherein the anion is tetrakis(pentafluorophenyl)borate.

10. Adhesive tape according to any of the preceding claims, **characterized in that** the radiation-activatable polymerizable composition exhibits a dark reaction after radiative activation and especially has an open time of at least one minute after exposure to UV light by the test method in the description, preferably an open time of 1 to 5 minutes, where the dark reaction at a temperature of 25°C has concluded especially after 24 hours.

11. Adhesive tape according to any of the preceding claims, **characterized in that** the adhesive tape comprises at least one carrier layer.

12. Method of joining two components by means of adhesive tape according to Claims 1 to 11, **characterized in that** the adhesive tape is applied to the first component and then polymerization is activated by irradiating with radiation of suitable wavelength and the second component is placed on, wherein the polymerization for ultimate joining of the two components proceeds as a dark reaction and especially without additional thermal energy input from outside.

13. Method according to Claim 12, **characterized in that** the components have a UV transparency of less than 1% at a material thickness of 1 cm.

14. Use of an adhesive tape according to any of Claims 1 to 11 for joining of two components, especially two components that have a UV transparency of less than 1% at a material thickness of 1 cm.

## Revendications

1. Ruban adhésif autoadhésif, contenant ou constitué d'une composition polymérisable pouvant être activée par un rayonnement contenant ou constituée de :
A 5 à 60 parties en poids d'au moins un composant filmogène ;
B 40 à 95 parties en poids d'au moins un composant de type époxyde ;
C 0,1 à 10 parties en poids d'au moins un photoinitiateur, ainsi que
D éventuellement 0,1 à 200 parties en poids d'au moins un additif,
à chaque fois par rapport à la composition polymérisable pouvant être activée par un rayonnement, les parties en poids des composants A et B atteignant 100 ensemble,
**caractérisé en ce que** le composant filmogène A comprend au moins un polymère de type polyuréthane ou en est constitué.

2. Ruban adhésif selon la revendication 1, **caractérisé en ce que** le polymère de type polyuréthane du composant filmogène A présente un poids moléculaire moyen en poids M_{w} d'au moins 40 000 g/mole, déterminé par CPG avec un polystyrène en tant que référence selon la méthode de mesure dans la description, en particulier d'au moins 50 000 g/mole, préférablement de 75 000 à 500 000 g/mole.

3. Ruban adhésif selon la revendication 1 ou 2, **caractérisé en ce que** le polymère de type polyuréthane du composant filmogène A est un polymère de type polyuréthane linéaire.

4. Ruban adhésif selon l'une quelconque revendication précédente, **caractérisé en ce que** le polymère de type polyuréthane du composant filmogène A est un polymère de type polyuréthane fonctionnalisé par OH.

5. Ruban adhésif selon l'une quelconque revendication précédente, **caractérisé en ce que** le composant de type époxyde B contient au moins 10 % en poids de résines époxy liquides à 25 °C, par rapport au composant de type époxyde B.

6. Ruban adhésif selon l'une quelconque revendication précédente, **caractérisé en ce que** le composant de type époxyde B contient au maximum 60 % en poids de résines époxy à base d'époxycyclohexyle, par rapport au composant de type époxyde B.

7. Ruban adhésif selon l'une quelconque revendication précédente, **caractérisé en ce que** le composant de type époxyde B présente une fonctionnalité moyenne par rapport aux groupes époxyde d'au moins 1,5 à 6,0, en particulier de 1,75 à 4.

8. Ruban adhésif selon l'une quelconque revendication précédente, **caractérisé en ce que** le composant de type époxyde B contient au moins deux résines époxy différentes B1 et B2, desquelles
a. la première résine époxy B1 présente une viscosité dynamique à 25 °C inférieure à 500 Pa*s, mesurée selon la norme DIN 53019-1 (2008-09) à une température de mesure de 25 °C et une vitesse de cisaillement de 1 x s⁻¹, et
b. desquelles la deuxième résine époxy B2 présente une température de ramollissement d'au moins 45 °C ou une viscosité dynamique à 25 °C d'au moins 1 000 Pa*s, mesurée selon la norme DIN 53019-1 (2008-09) à une température de mesure de 25 °C et une vitesse de cisaillement de 1 x s⁻¹,
en particulier la proportion de la première résine époxy B1 étant de 10 à 90 % en poids, préférablement de 20 à 75 % en poids et la proportion de la deuxième résine époxy B2 étant de 10 à 90 % en poids, préférablement de 25 à 80 % en poids, par rapport au composant de type époxyde B.

9. Ruban adhésif selon l'une quelconque revendication précédente, **caractérisé en ce que** le photoinitiateur C contient un composé dont l'anion est tétrakis(pentafluorophényl)borate, ou en est constitué.

10. Ruban adhésif selon l'une quelconque revendication précédente, **caractérisé en ce que** la composition polymérisable pouvant être activée par un rayonnement présente une réaction obscure après l'activation par un rayonnement et possède en particulier un temps ouvert d'au moins une minute après une exposition avec de la lumière UV selon la méthode de mesure dans la description, de préférence un temps ouvert de 1 à 5 minutes, la réaction obscure à une température de 25 °C étant terminée en particulier après 24 heures.

11. Ruban adhésif selon l'une quelconque revendication précédente, **caractérisé en ce que** le ruban adhésif comprend au moins une couche de support.

12. Procédé pour joindre deux pièces au moyen d'un ruban adhésif selon des revendications 1 à 11, **caractérisé en ce que** le ruban adhésif est appliqué sur la première pièce et ensuite irradié avec un rayonnement d'une longueur d'onde appropriée pour l'activation de la polymérisation et la deuxième pièce est disposée, la polymérisation, pour l'assemblage final des deux pièces, se déroulant en tant que réaction obscure et en particulier sans apport énergétique thermique supplémentaire de l'extérieur.

13. Procédé selon la revendication 12, **caractérisé en ce que** les pièces possèdent, à une épaisseur de matériau de 1 cm, une transmittance des UV inférieure à 1 %.

14. Utilisation d'un ruban adhésif selon l'une quelconque revendication 1 à 11 pour joindre deux pièces, particulier deux pièces qui possèdent, à une épaisseur de matériau de 1 cm, une transmittance des UV inférieure à 1 %.
